# EUROPEAN PATENT APPLICATION

(11) **EP 4 659 962 A1**
(43) Date of publication of application: **10.12.2025**
(21) Application number: 25177265.3
(22) Date of filing: 19.05.2025
(51) Int. Cl.: B41J 3/407, B41J 2/165, B41J 11/00, G01N 1/36, G01N 35/00

(54) **INKJET PRINTER**

(30) Priority: 04.06.2024 US 202463656060 P; 25.10.2024 US 202418927671
(71) Applicant: Sakura Finetek U.S.A., Inc., Torrance, CA 90501 (US)
(72) Inventor: SHEPPARD, Robert Jeff, Torrance (CA), 90503 (US); TSUZUKI, Ryo, Redondo Beach (CA), 90278 (US); SHAH, Amit D., Redondo Beach (CA), 90278 (US)
(74) Representative: Studio Torta S.p.A.

(57) **Abstract**

A printer including a housing including: (1) an entrance opening operable for an introduction of one or more cassettes or cassette frames into the housing; (2) a print engine sub-assembly including: (a) an inkjet cartridge holder operable to accept an inkjet cartridge; and a heater; (3) a chute disposed between the entrance opening and the print engine; and (4) a processor including non-transitory machine -readable instructions to: (a) direct a conveyance of a cassette or cassette frame introduced in the entrance opening to the print engine; and (b) direct the heater to at least one of heat a face of the cassette or cassette frame before and after a print operation. A method including: heating a face of a cassette or cassette frame; and after heating, printing an identifier on the face of the cassette or cassette frame using an inkjet printing process. A method including: placing a cassette or cassette frame inside an inkjet printer; printing an identifier on a face of the cassette or cassette frame using an inkjet printing process; reading the identifier while the cassette or frame is inside the inkjet printer; automatically determining if the identifier is readable and correct; and if the identifier is determined to be not readable or not correct, printing on the identifier on the face of the cassette or frame using the inkjet printer to destroy or mar the identifier.

## Description

### CROSS-REFERENCE TO RELATED APPLICATIONS

This nonprovisional patent application claims the benefit of pending United States provisional patent application number 63/656,060 titled "Inkjet Printer" filed on June 4, 2024, the contents of which are incorporated herein in their entirety.

### TECHNICAL FIELD

### Cassette Printer.

### BACKGROUND

Tissues from the body taken for diagnosis of disease processes are often processed in the histology laboratory to produce paraffin blocks embedding them to then cut thin tissue sections which can be mounted on slides, stained and viewed under a microscope by a pathologist for analysis. These pre-analytical processes generally include, in order, gross examination, fixation, dehydration, clearing, paraffin infiltration and embedding. The procedure is used for processing tissues including biopsies, larger specimens removed at surgery, or tissues from autopsy.

Gross examination generally consists of describing the macroscopic specimen and placing all or selected parts of it into a sample carrier such as a small plastic cassette which holds the tissue while it is being processed to a paraffin block. Initially, the cassettes are placed into a fixative.

Following gross examination, the fixation of the tissue continues. A purpose of fixation is to preserve tissues permanently in as life-like a state as possible by altering structures of proteins such that degradation by autolysis does not occur. Once the tissue has been fixed or fixated, the tissue needs to be processed into a form in which it can be made into thin sections for microscopic examination. The usual way this is done is with paraffin. Embedding tissue in paraffin provides a solid support matrix for the tissue allowing it be sectioned at a thickness on the order of 1 to 20 microns. Getting fixed tissue into paraffin for sectioning is called tissue processing with the main steps in this process being dehydration, clearing, infiltration, which then is followed by embedding.

Tissues fixed in aqueous solutions cannot be directly infiltrated with paraffin. First, the water from the tissues must be removed by dehydration. This may be done with a series of alcohols at different concentrations (e.g., 70 percent to 95 percent to 100 percent). Alternatively, the dehydration may be done with a mixture of formalin and alcohol. Other dehydrants can also be used such as acetone or mixtures of different solvents.

Following dehydration, the tissue is cleared. "Clearing" consists of removal of the dehydrant and some of the lipids with a substance that will be miscible with the embedding medium (e.g., paraffin). The most common clearing agent is xylene.

Once cleared, the tissue is infiltrated with an embedding agent such as paraffin. Finally, the tissue in a cassette or removed from its cassette is placed into molten paraffin and then the paraffin is cooled to form a solidified block embedding or encapsulating the tissue so that it can be sectioned. Alternatively, the tissue can be processed in a sectionable cassette, embedded in paraffin along with the cassette and sectioned. Once the tissue has been embedded in a solid paraffin block, the tissue can be cut into sections that can be placed on one or multiple slides. This is done with a microtome. Once sections are cut, they are floated on a warm water bath that helps remove any wrinkles. The tissue sections in paraffin are then picked up from the water bath and placed on a glass microscope slide.

A sample carrier such as a cassette may be marked with identification and/or process information. The introduction of barcodes has made it possible to machine read barcodes printed on a sample carrier and to track the sample carrier during histological sample processing, embedding, sectioning and any verifications steps from creation to archiving.

### BRIEF DESCRIPTION OF THE DRAWINGS

Embodiments are illustrated by way of example and not by way of limitation in the figures of the accompanying drawings in which like references indicate similar elements. It should be noted that references to "an" or "one" embodiment in this disclosure are not necessarily to the same embodiment, and such references mean at least one.
**Figure 1** shows a top right side side perspective view of a tissue cassette;
**Figure 2** shows a top right perspective exploded view of a different tissue cassette or a cassette system;
**Figure 3** shows a top right side perspective view of an inkjet printer for automatically printing identifier information (an identifier) on a cassette such as the cassette of **Figure 1** or the frame of the cassette system of **Figure 2****;**
**Figure 4** shows a top left side perspective view of the inkjet printer of **Figure 3****;**
**Figure 5** shows a left side view of printer 100 of the inkjet printer of **Figure 3****;**
**Figure 6** is a view through line 6-6' in **Figure 5****;**
**Figure 7** is a view through line 7-7' in **Figure 5****;**
**Figure 8** is a back side view of the printer of **Figure 3****;**
**Figure 9** is a front left side perspective view of the printer of **Figure 3** with panels that make up the left, right and front sidewalls removed;
**Figure 10** shows a top rear left side perspective view of a service station that can be placed in the inkjet printer of **Figure 3****;**
**Figure 11** is an exploded top front right side perspective view of the service station of **Figure 10****;**
**Figure 12** shows a top right side perspective view of the inkjet printer of **Figure 3** with the housing removed;
**Figure 13** shows a top left front side perspective view of a hopper sub-assembly of the inkjet printer of **Figure 3** separated from an electronics and bottom plate sub-assembly and a print engine sub-assembly;
**Figure 14** shows a top left rear side perspective view of the hopper sub-assembly of Figure 13 separated from the electronics and bottom plate sub-assembly and the print engine sub-assembly;
**Figure 15A** shows a top rear side perspective view of an example of a cassette magazine suitable for use in the inkjet printer of **Figure 3****;**
**Figure 15B** shows a top front side perspective view of the cassette magazine of **Figure 15A****;**
**Figure 16** shows a top perspective exploded view of the cassette magazine of **Figure 15A****;**
**Figure 17** shows a top side perspective view of a magazine base or sleeve suitable for use in the inkjet printer of **Figure 3****;**
**Figure 18** shows a top side perspective view of a second magazine base or sleeve suitable for use in the inkjet printer of **Figure 3****;**
**Figure 19** shows a top right side perspective view of the electronics and bottom plate sub-assembly of the inkjet printer of **Figure 3** separated from the hopper sub-assembly and the print engine sub-assembly;
**Figure 20** is a rear view of the separated electronics and bottom plate sub-assembly of **Figure 19****;**
**Figure 21** is a left side view of the separated electronics and bottom plate sub-assembly of **Figure 19****;**
**Figure 22** shows a perspective top view of a tilting chute assembly of the electronics and bottom plate sub-assembly of **Figure 19****;**
**Figure 23** shows a top view of the tilting chute assembly of **Figure 22****;**
**Figure 24** shows a view through line 24-24' of **Figure 23****;**
**Figure 25** shows a view of the electronics and bottom plate sub-assembly of **Figure 19** through line 25-25' of **Figure 20****;**
**Figure 26** shows a right side view of the electronics and bottom plate sub-assembly 250 after the tilting chute of the tilting chute assembly has been rotated clockwise, as viewed, to match the same angle or slope as the chute of the hopper assembly;
**Figure 27** shows a right side view of the electronics and bottom plate sub-assembly of **Figure 19** and shows the tilting chute of the tilting chute assembly rotated to a heating and printing position;
**Figure 28** shows a front side view of the print engine sub-assembly of the inkjet printer of **Figure 3** separated from the electronics and bottom plate sub-assembly and the hopper sub-assembly;
**Figure 29** shows a top perspective front side view of the print engine sub-assembly of the inkjet printer of **Figure 3** separated from the electronics and bottom plate sub-assembly and the hopper sub-assembly and with an electronics guard and a fan guard 389 removed;
**Figure 30** shows a top perspective rear side view of the print engine sub-assembly of the inkjet printer of **Figure 3** separated from the electronics and bottom plate sub-assembly and the hopper sub-assembly and with an electronics guard and a fan guard removed;
**Figure 31** shows a top perspective front side view of print-engine sub-assembly 270 with an electronics guard and a fan guard removed and also with a curing device and reading removed;
**Figure 32** shows a top right side perspective view of an inkjet cartridge suitable for use in the inkjet printer of **Figure 3****;**
**Figure 33** shows an example of a user interface allowing a user to operate the inkjet printer of **Figure 3****;**
**Figure 34** is a front view of the inkjet printer of **Figure 3** with a front sidewall removed;
**Figure 35** shows a rear view of a lower panel of the front sidewall of the housing of the inkjet printer of **Figure 3****;**
**Figure 36** shows a top right perspective rear view of lower panel of the front sidewall of the housing of the inkjet printer of **Figure 3****;** and
**Figure 37** is a flowchart of a printing operation in the inkjet printer of **Figure 3****.**

### DETAILED DESCRIPTION

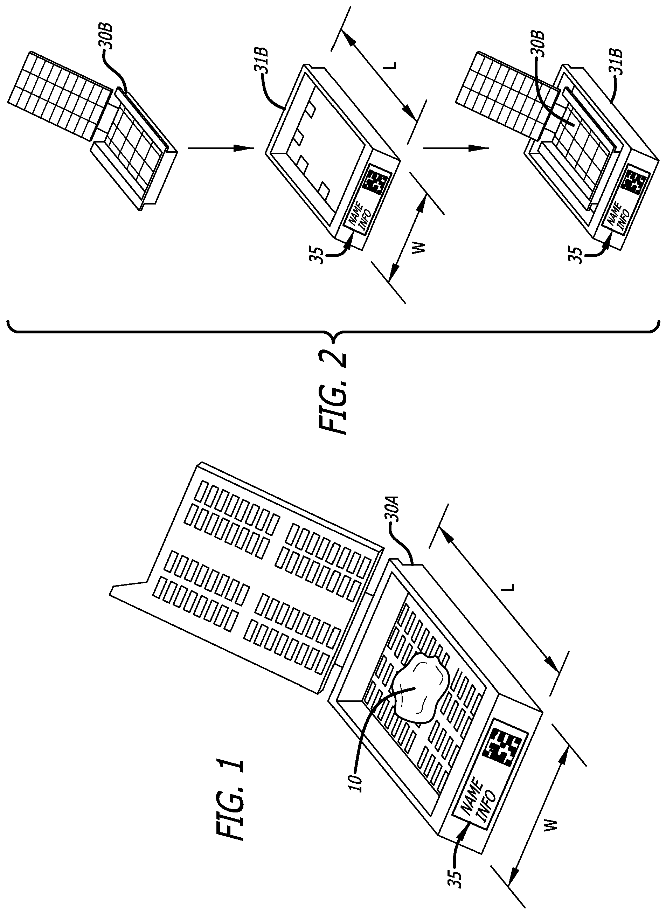

**Figure 1** shows a top right side perspective view of a tissue cassette. Cassette 30A is generally a rectangular box of a rigid polymer material having an interior volume defined by sidewalls and a base and having a retractable, hinged lid. A front sidewall or face of cassette 30 may be disposed at, for example, a 30-50 degree angle, such as a 45 degree angle, relative to the base with the other sidewalls at approximately a 90 degree angle relative to the base. One example of cassette 30A is a Tissue-Tek® Uni-Cassette® commercially available from Sakura Finetek USA, Inc. of Torrance, California. A Tissue-Tek^{®} Uni-Cassette^{®} has an exterior width dimension, W, of 28 millimeters (mm), an exterior length, L, of 41 mm when the lid is open and an underside of the lid is facing upward and an exterior height of 6 mm. Another example of cassette 30A is a Tissue-Tek^{®} Mega-Cassette^{™} commercially available from Sakura Finetek USA, Inc. which has an exterior width dimension, W, of 25 mm, an exterior length, L, of approximately 82 mm when the lid is open and an underside of the lid is facing upward and an exterior height of 10 mm.

**Figure 2** shows a top right perspective exploded view of a second cassette. Cassette 30B is a two-part cassette system or assembly including rectangular frame 31B of sidewalls of a rigid polymer material and a cassette of a material that has sectioning characteristics similar to paraffin. The cassette includes a rectangularly-shaped body including an interior volume defined by sidewalls and a base and a retractable, hinged lid. The cassette sidewalls include an upper outwardly projecting flange that, when the cassette is inserted into the frame to form the assembly, the flange catches on inward projections on the frame to retain the cassette in the frame. One example of cassette 30B is a Tissue-Tek^{®} Paraform^{®} sectionable cassette that fits into a Tissue-Tek^{®} Paraform^{®} frame, both the cassette and frame commercially available from Sakura Finetek USA, Inc. A Tissue-Tek^{®} Paraform^{®} sectionable cassette and frame assembly has exterior width and length dimensions similar to a Tissue-Tek^{®} Uni-Cassette^{®} cassette but may have an exterior height dimension slightly less as there is no rigid polymer lid. For the discussion herein, unless otherwise noted, a "cassette" such as cassette 30A or cassette 30B includes a unitary cassette as in the Tissue-Tek^{®} Uni-Cassette^{®} or a cassette assembly as in the Tissue-Tek^{®} Paraform^{®} sectionable cassette that fits into a Tissue-Tek^{®} Paraform^{®} frame.

As shown in **Figure 1****,** each of cassette 30A and cassette 30B includes identifier 35 such as a barcode that contains or references information such as patient information, physician information and optionally processing protocol for the tissue sample is affixed by a technician to the front sidewall or face of cassette 30. A representative barcode may be a a two-dimensional (2D) barcode. Identifier 35 is illustrated as a 2D barcode. Identifier 35 may also include text in addition to a barcode. Representative text includes patient name, a testing variable, a physician name, a date and a count. Identifier 35 may be printed directly on the front sidewall or face of the cassette or frame in the case of a cassette assembly.

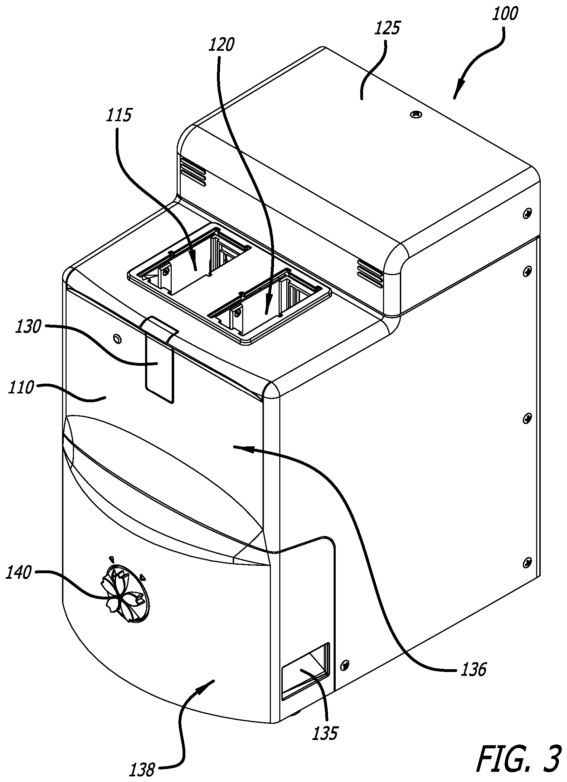

**Figure 3** shows a top right side perspective view of a printer for automatically printing identifier information (an identifier) on a cassette or frame. Printer 100 includes housing 110 that is a generally rectangular body made up of a base, front and back opposing sidewalls and left and right opposing sidewalls and top. Housing 110 has dimensions (height, width and depth) that make it suitable for use on a lab bench or table top.

Disposed in a top of housing 110 is hopper 115 and hopper 120 each operable to accept a magazine of cassettes therein. A top of housing 110 also includes lid 125 positioned behind hopper 115 and hopper 120. Lid 125 is connected to the rear sidewall by a hinge that allows lid 125 to be opened to expose a print engine inside housing 110 by rotating the lid about the hinge.

Front sidewall includes upper panel 136 and lower panel 138. Disposed in upper panel 136 of the front sidewall of housing 110 of printer 100 is cassette door 130. Opening or removing cassette door 130 provides an access opening for insertion of a single cassette or frame (e.g., one at a time) into printer 100. At a base of each of the left sidewall and the right sidewall of lower panel 138 is an exit opening through which cassettes or frames may be discharged from printer 100 after printing. In **Figure 3****,** only a left sidewall is visible and shows exit opening 135. The presence of two exit openings allow a user of printer 100 to select which exit opening the user wants cassettes or frames to exit the printer. A user makes this selection by positioning (turning) knob or dial 140 on lower panel 138 of the front sidewall of housing 110 to the left or the right. The front sidewall of housing 110 further includes status light 145 which may be an light emitting diode that emits a green light when printer 100 is on and operable or a red light if there is an issue to address with the printer.

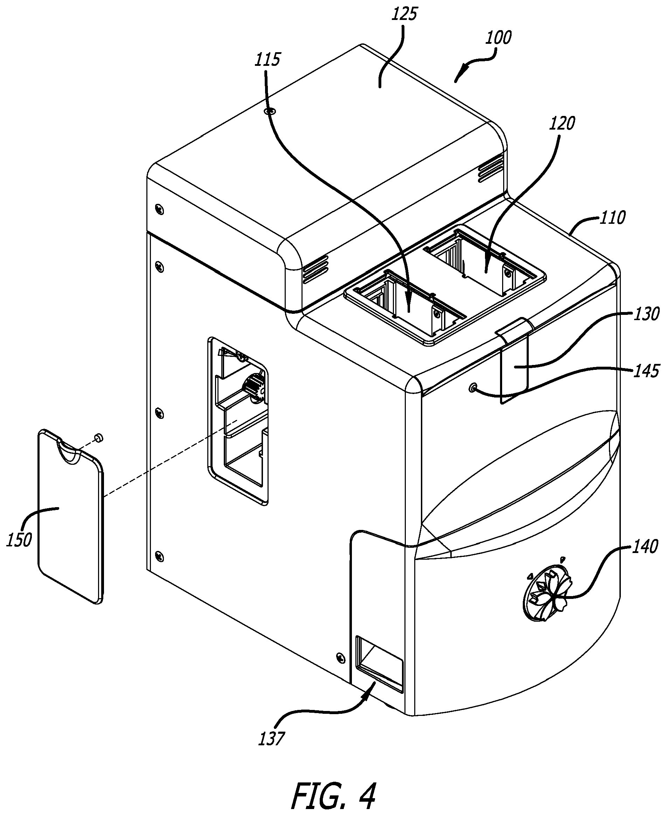

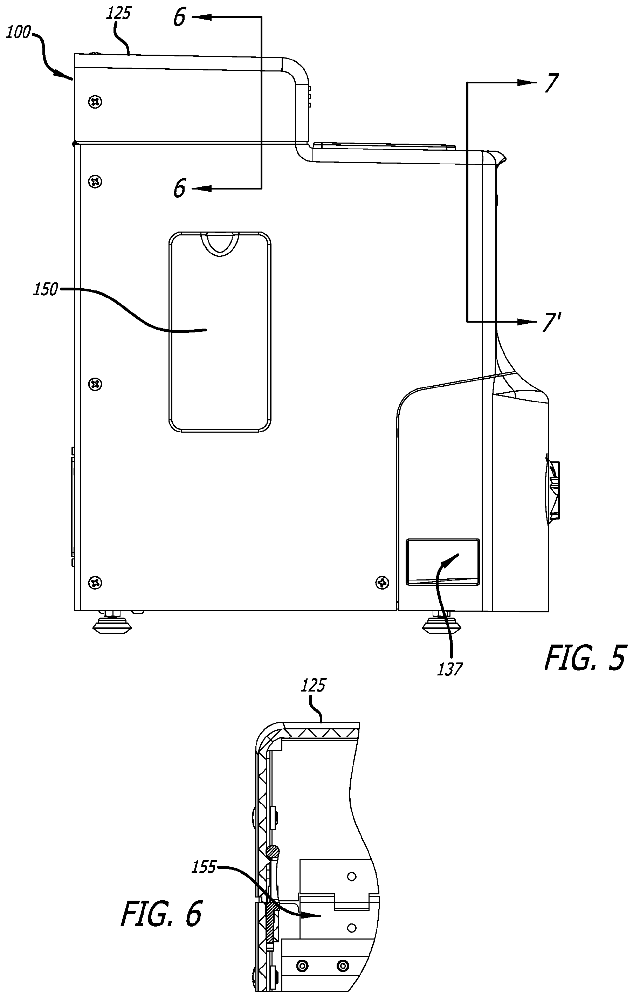

**Figure 4** shows a top left side perspective view of printer 100. **Figure 5** shows a left side view of printer 100. Referring to **Figure 4** and **Figure 5****,** in a base of the left sidewall of housing 110 is exit opening 137 that is similar to exit opening 135 in the right sidewall discussed above. **Figure 4** and **Figure 5** also show that the left sidewall of housing 110 includes service station door 150. Opening of service station door 150 provides an access opening for inserting and/or replacing a service station in inkjet printer 100.

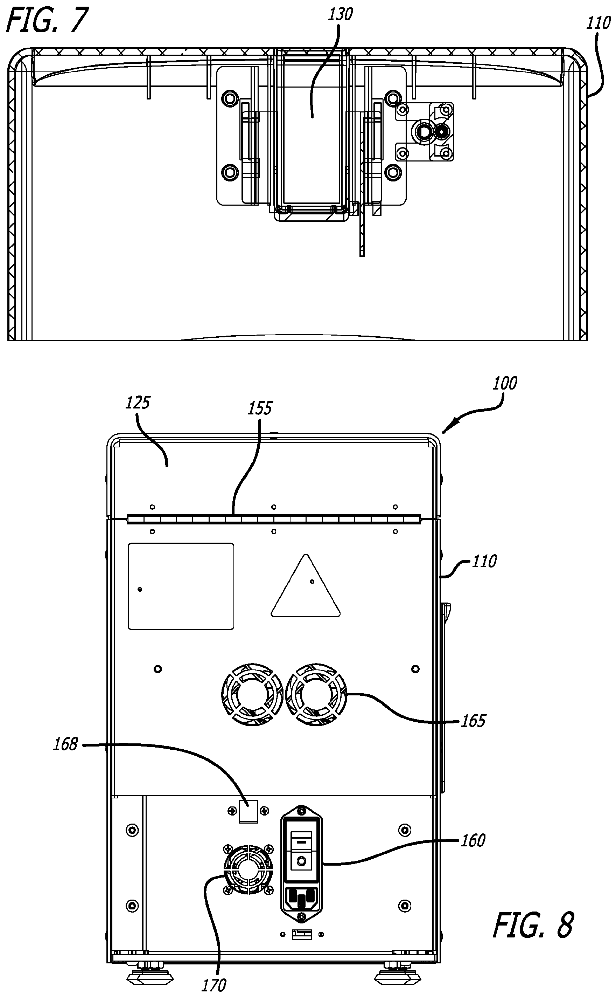

**Figure 6** is a view through line 6-6' in **Figure 5. Figure 6** shows lid 125 of printer 100 connected to a back sidewall of housing 110 by hinge 155 to allow lid to be rotatable about the hinge 155 to provide access into printer 100 from above. **Figure 7** is a view through line 7-7' in **Figure 5** and shows cassette door through which a single cassette may be inserted for printing. **Figure 8** is a back side view of printer 100 and shows lid 125 of printer 100 connected to a back sidewall of housing 110 by hinge 155. The back side view of **Figure 8** also shows power port 160 for direct current power, local area network (LAN) port to access a controller inside the instrument and fan vents or openings 165 (two openings) behind a print engine area and fan vent or opening 170 near a base of printer behind an electronics region of the device.

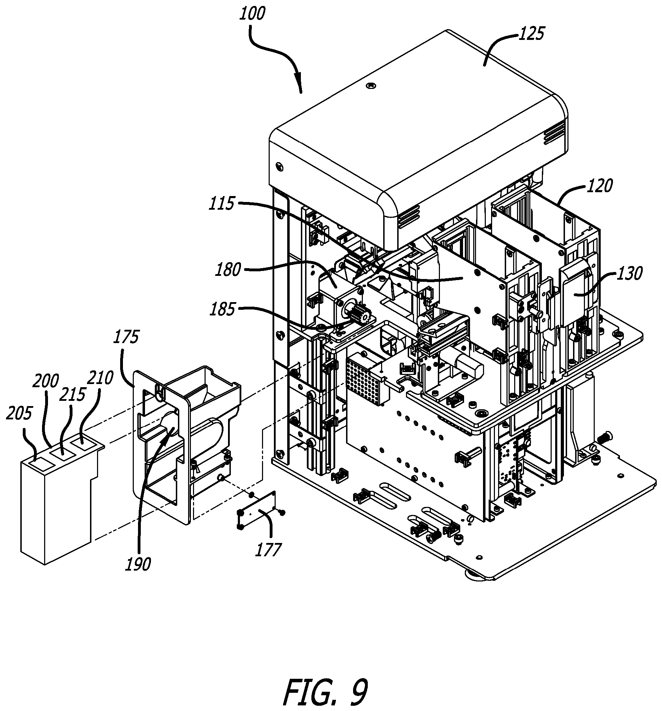

**Figure 9** is a front left side perspective view of printer 100 with panels that make up the left, right and front sidewalls removed. **Figure 9** shows hopper 115 and hopper 120 each having dimensions to accept a cassette magazine therein. **Figure 9** also shows service station bracket 175 that is positioned inside housing 110 and accepts a replaceable service station 200. Service station 200 provides a servicing function to an inkjet cartridge. Service station 200 is a consumable unit designed to provide a certain number of servicing to an inkjet cartridge or cartridges and then be replaced. Service station 200 includes a generally rectangularly-shaped housing having a bumped-out forehead section on its front face. Service station 200 is positioned in bracket 175 with its front face furthest into printer 100 and its rear face facing service station door 150 (see e.g., **Figure 4** for service station door 150). Service station 200 includes roller 205 and roller 210 separated by spittoon 215 in a top face of its housing. Each of roller 205 and roller 210 may be a pliable polymer material such as foam. Disposed on a surface of roller 205 and roller 210 is ribbon 220. Ribbon 220 has a first side that is a cloth or similar absorbent material and a second side that is a polymer nonporous film. Ribbon 220 is fed around roller 210 so that a cloth or similar absorbent material is up and around roller 205 so that the film side is up. The cloth or similar absorbent material on roller 210 of ribbon 220 provides a cleaning or wiping area for wiping a printhead (e.g., excess ink on a printhead). The film side of ribbon 220 provides a sealing function for the printhead when in contact therewith to prevent the ink in an inkjet cartridge from drying or evaporating or otherwise contaminating. Spittoon 215 between roller 205 and roller 210 provides a region for an inkjet cartridge to discharge an amount of ink before and/or after a printing operation(s).

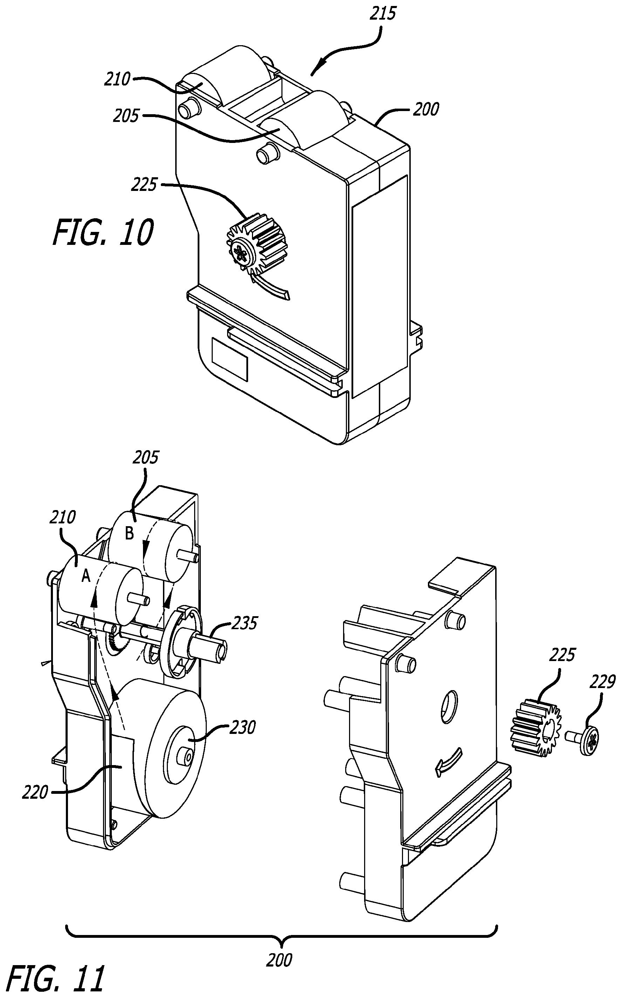

**Figure 10** shows a top rear left side perspective view of service station 200. **Figure** 11 is an exploded top front right side perspective view of service station 200. As seen in **Figure 10** and **Figure 11****,** service station 200 includes gear 225 protruding from a left sidewall. Gear 225 is connected to a shaft of take-up roller 235 that extends through the housing of service station to right sidewall where it is supported by a bracket. Gear retainer 229 secures gear 225 to shaft 235. Referring to **Figure 9****,** inside printer 100 is motor 180 and gear 185 connected to motor 180 through a shaft. When service station 200 is placed in service station bracket 175 in printer 100, gear 225 protrudes through opening 190 in a side of service station bracket and engages with gear 185 of printer 100.

As seen in **Figure 11****,** roller 205 and roller 210 are partially within a volume of a housing of service station 200 and partially protrude through a top surface of the housing. Each of roller 205 and roller 210 are positioned on a dedicated shaft disposed between opposing sidewalls of the housing and on which each roller rotates. Service station 200 also includes ribbon roll 230 and take-up roll 235 inside the housing. Ribbon roll 230 feeds a length of ribbon 220 to roller 205 and roller 210. Representatively, as shown in dashed arrow in **Figure 11****,** ribbon 220 may be fed clockwise over roller 210 with cloth or absorbent material side up (step A), then then counterclockwise over roller 205 (step B) with film side up and then to take-up roller 235 (step C). By feeding ribbon 220 to take-up roller 235, the ribbon may be advanced by motor 180 and rotation of gear 185 which in turn rotates gear 225 of service station 200 as desired, such as after one or more wipes at a single position on ribbon 220 on roller 210 to provide a clean surface of cloth or absorbent material. This may continue until a length of ribbon 220 around ribbon roll 230 is predominantly used at which time service station 200 may be removed from printer 100 and replaced with another service station with a new ribbon. As seen in **Figure 10****,** service station 200 includes radio frequency identification (RFID) tag 240 attached to an outer sidewall that may contain information about ribbon 220 such as its length and construction as well as a count tied to a service life of an inkjet cartridge to be used in inkjet printer 100 where a service life of service station 200 is linked to a service life of an inkjet cartridge in inkjet printer 100. Representatively, an inkjet cartridge may have a service life of 10,000 identifier prints. RFID tag 240 may thus have an initial count of 10,000. Referring to **Figure 9****,** service station bracket 175 includes RFID reader/writer 177 that is operable to read and write to RFID tag 240. RFID reader/writer 177 can read RFID tag 240 and with instructions from PC controller 275 reduce the total count with each identifier print by an inkjet cartridge. Starting from a 10,000 print count on RFID tag 240, after a first identifier is printed on a cassette or frame by an inkjet cartridge in inkjet printer, the count will be reduced by one. RFID reader/writer can rewrite the count on RFID tag 240 from 10,000 to 9,999. This allows a determination as to when to replace service station 200 in printer 100.

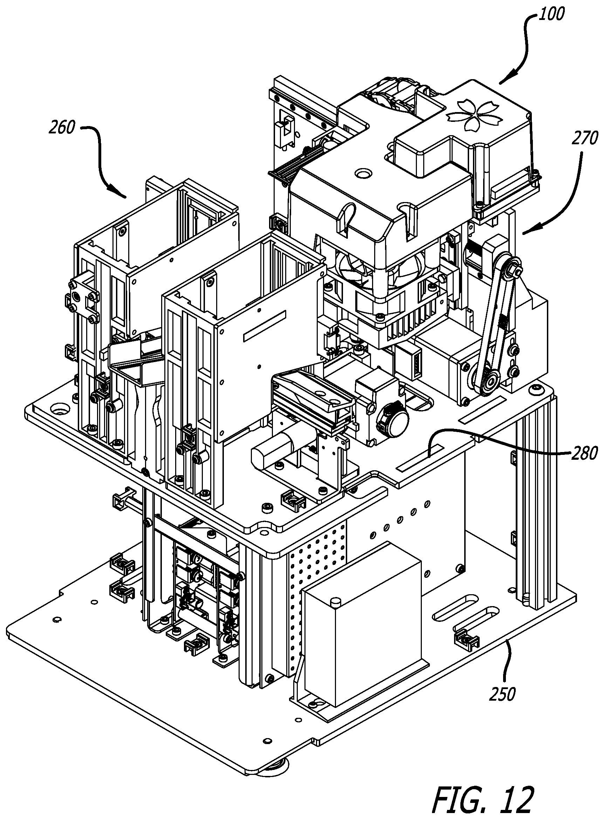

**Figure 12** shows a top right side perspective view of printer 100 with housing 110 removed. In this view, three sub-assemblies of printer 100 are visible: electronics and bottom plate sub-assembly 250; hopper sub-assembly 260; and print engine sub-assembly 270. **Figure 12** shows electronics and bottom plate sub-assembly 250 at a base of printer 100 and hopper sub-assembly 260 and print engine sub-assembly 270 on platform 280 above electronics and bottom plate sub-assembly 250.

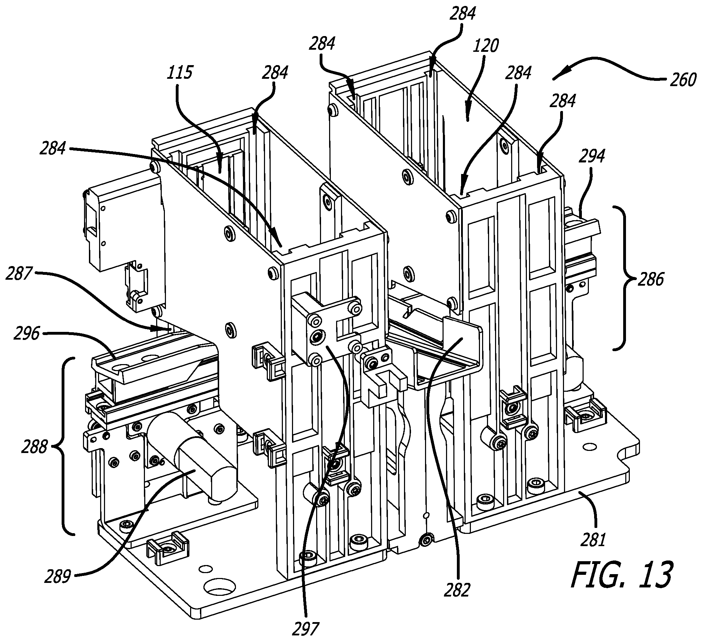

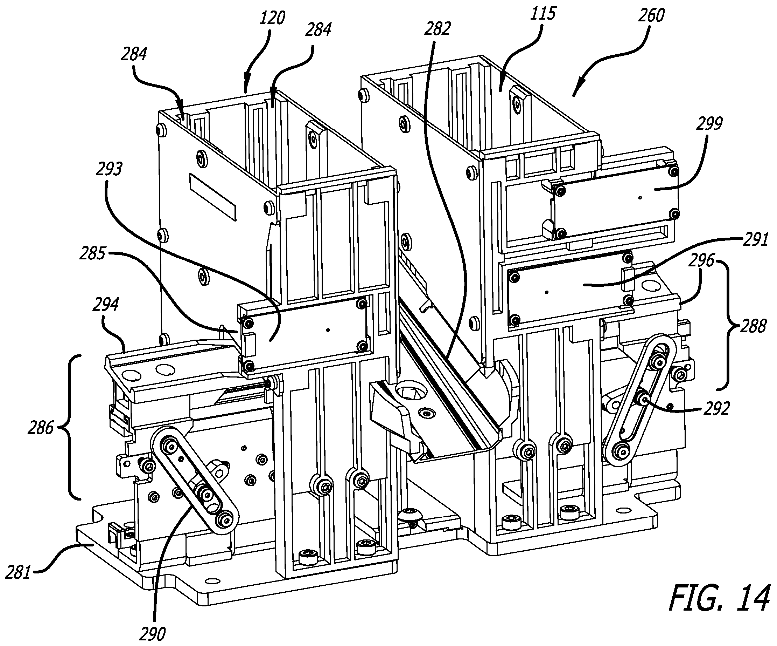

**Figure 13** shows a top left front side perspective view of hopper sub-assembly 260 separated from electronics and bottom plate sub-assembly 250 and print engine sub-assembly 270. **Figure 14** shows a top left rear side perspective view of hopper sub-assembly 260 separated from electronics and bottom plate sub-assembly 250 and print engine sub-assembly 270. Hopper sub-assembly 260 includes hopper 115 and hopper 120 each operable to accept a magazine of cassettes therein. Each hopper is rectangularly shaped with opposing sidewalls and an open top and base. Front and rear sidewalls of hopper 115 and hopper 120 are connected to base plate 281. Left and right sidewalls of of hopper 115 and hopper 120 are generally rectangular but stepped midway from front to back to define opening 285 and opening 287. Positioned between and connected to hopper 115 and hopper 120 is chute 282. Chute 282 has a width at least slightly greater than a width of a widest cassette acceptable for printing by inkjet printer 100. A representative width of chute 282 is on the order of 35 mm to 50 mm. Chute 282 has a flat upper surface disposed at an angle on the order of 30° to 50° relative to base plate 281 such that chute 282 is slopped downward from front to back allowing a cassette placed on chute 282 to slide down the chute from front to back. A front end of chute 282 extends to a rear side of upper panel 136 of a front sidewall of inkjet printer 100 to door 130 (see **Figure 3****).** Opening door 130 allows a user to place a cassette on chute 282.

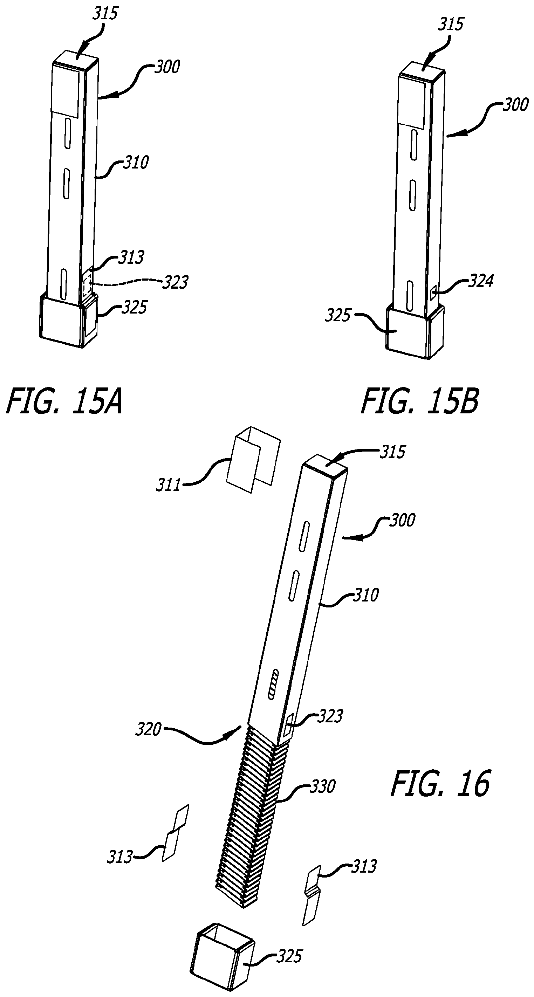

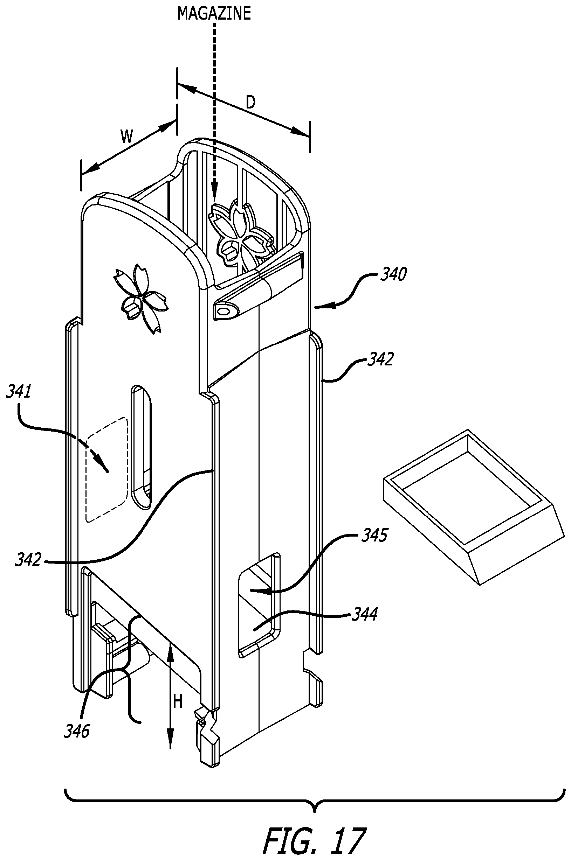

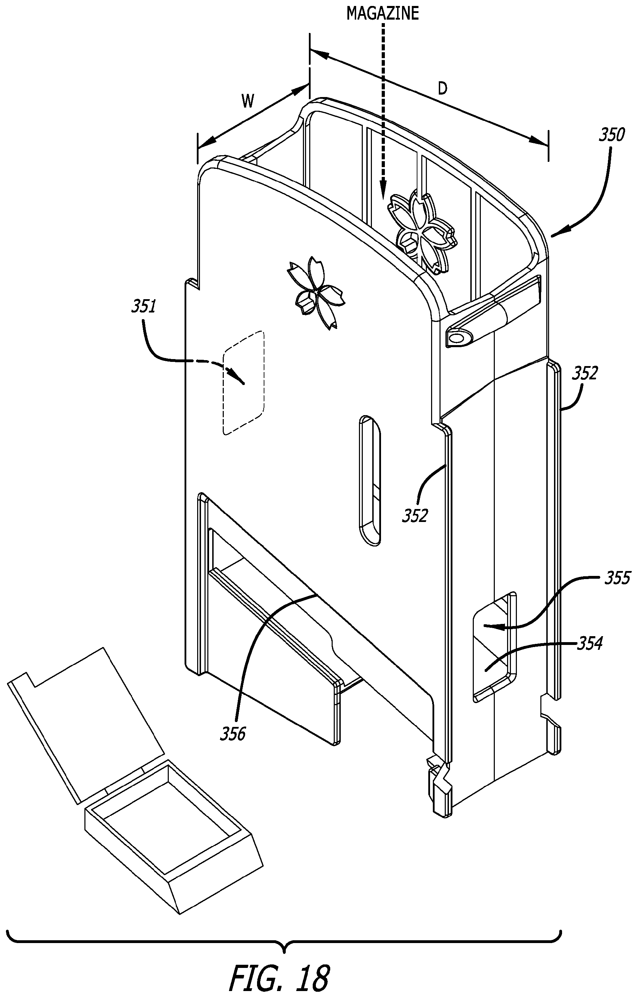

**Figure 15A** shows a top rear side perspective view of an example of a cassette magazine. **Figure 15B** shows a top front side perspective view of the cassette magazine. **Figure 16** shows an exploded view of the cassette magazine of **Figure 15A****.** Cassette magazine 300 includes hollow rectangular body 310 of plastic, chipboard or pasteboard with a closed top or lid 315 and an open bottom or base 320. As shown in **Figure 15A** and **Figure 16****,** a rear sidewall of cassette magazine 300 includes RFID tag 323 near a base of the cassette magazine. RFID tag 323 contains information readable by an RFID reader about the type of cassette or frame in cassette magazine 300, its color and the number of cassettes or frames present in the cassette magazine. Body 310 has inner dimensions to accommodate cassettes or frames 330 in a stacked top to bottom arrangement therein. As shown in **Figure 15B****,** a front sidewall of cassette magazine includes rectangular protrusion 324 near a base of the cassette magazine. Rectangular protrusion 324 serves as an alignment stop or point of securement when cassette magazine 300 is placed in a magazine base or sleeve as described below with reference to **Figure 17** and **Figure 18****.**

Cassettes or frames 330 are arranged in cassette magazine 300 with their face facing rearward (toward a rear sidewall) and their base downward (toward a base of cassette magazine 300). Representatively, a Tissue-Tek^{®} Paraform^{®} biopsy cassette frame has dimensions of 13 millimeters (mm) by 13 mm. The inner dimensions of rectangular body 310, width and depth dimensions, will have slightly larger dimensions than the Tissue-Tek^{®} Paraform^{®} biopsy cassette frame, for example, 14 mm by 14 mm so that a frame can be accommodated in body 310 and maintain a stacked configuration with other similar frames. Cassette magazine 300 has a length to representatively accommodate 20, 30, 40 or 50 cassettes or frames 330. Cassette magazine 300 includes removable cap 325 at a base of the cassette magazine. Cap 325 is formed of two pairs of opposing sidewalls, an open top and a bottom that has a top or inner surface with a slight downward slant (e.g., a 5° to 15° slant) from a front side to a rear side of the cap. The downward slant of the bottom of cap 325 positions cassettes or frames 330 in magazine 300 with an equivalent to a slant angle. Cap 325 is removed (e.g., manually removed) when cassette magazine 300 is loaded into hopper 115 or hopper 120 of inkjet printer 100. Cassette magazine 300 may also include label 311 indicating the type and color of cassettes or frames in the cassette magazine as well as the quantity of cassettes or frames initially present. Cassette magazine may also include adhesive strips 313 affixed to the front and rear sides of magazine and cap 325 that attach cap 325 to cassette magazine and protect RFID tag 323. Adhesive strips 313 are removed when cassette magazine 300 is loaded into a magazine base or sleeve as described below with reference to **Figure 17** and **Figure 18****.**

Cassettes and frames are available in different dimensions (e.g., length and width dimensions). For example, the Tissue-Tek^{®} Paraform^{®} biopsy cassette frame is one piece rectangular frame including a face to receive identifier information such as a 1D or 2D barcode from an inkjet printer whereas the Tissue-Tek^{®} Uni-Cassette^{®} includes a cassette body of 28 mm and an exterior length of 41 mm when the lid is open and an underside of the lid is facing upward. Tissue-Tek^{®} Uni-Cassette^{®} cassettes are stacked in a cassette magazine such as cassette magazine 300 in an open configuration, with an underside of the lid facing upward. The width and depth dimension of a cassette magazine such as cassette magazine 300 containing Tissue-Tek^{®} Uni-Cassette^{®} cassettes will be considerably different than a cassette magazine containing Tissue-Tek^{®} Paraform^{®} biopsy cassette frames, e.g., 29 mm by 42 mm versus 14 mm by 14 mm. To accommodate the different width and depth dimensions of cassette magazines, hopper 115 and hopper 120 can be of different width and depth dimensions or hopper 115 and hopper 120 can have similar width and depth dimensions and inkjet printer 100 can be provided with magazine bases or sleeves of different sizes that have interior dimensions to accommodate particular cassette magazines therein and exterior dimensions to fit within hopper 115 or hopper 120.

**Figure 17** and **Figure 18** each shows a top side perspective view of a magazine base or sleeve. Magazine sleeve 340 in **Figure 17** representatively includes a hollow rectangular body of, for example, plastic having interior width, W, and depth, D, dimensions to accommodate a cassette magazine such as cassette magazine 300 that contains Tissue-Tek^{®} Paraform^{®} biopsy cassette frames. Representatively, magazine sleeve 340 has an interior width dimension, W, on the order of 16 mm to 18 mm and a similar interior depth dimension, D. Front and rear sidewalls of magazine sleeve include a pair of protruding rails 342 extending a portion of a length of the sidewalls. Rails 342 are operable to slide within grooves 284 in front and rear sidewalls of hopper 115 and hopper 120 shown in **Figure 13** and **Figure 14****.** A rear sidewall of magazine sleeve 340 includes opening or window 345 to expose an RFID tag on cassette magazine, such as RFID tag 323 on cassette magazine 300. Thus, a cassette magazine such as cassette magazine 300 is loaded into magazine sleeve 340 with its rear sidewall facing a rear sidewall of magazine sleeve 340 and extends a depth into magazine sleeve 340 to expose RFID tag 323 through opening or window 345.

Magazine sleeve 340 in **Figure 17** also includes base 344 that extends across the interior width, W, and depth, D, dimensions or may include a shelf on two opposing sidewalls or the four opposing sidewalls. Such a base or shelf will serve to support cassettes or frames in magazine sleeve 340 as a cassette magazine such as cassette magazine 300 is loaded into magazine sleeve 340 with its cap removed so that an open bottom end of the cassette magazine is facing base 344. Magazine sleeve 340 includes opposing left and right sidewalls. Each of the opposing left and right sidewalls has opening 346 at its base. Opening 346 has a height dimension, H, that exposes base 344 as well as at least one full cassette or frame (i.e., base 344 plus the height dimension of at least one cassette or frame).

A cassette magazine such as cassette magazine 300 is loaded into magazine sleeve 340 through the open top of magazine sleeve 340. A front sidewall of magazine sleeve 340 includes rectangularly-shaped opening or window 341 to accommodate a similarly-shaped and dimensioned protrusion on a front sidewall of a magazine (e.g., protrusion 324 on cassette magazine 300). Once a magazine such as magazine 300 is inserted into magazine sleeve 340, the front sidewall protrusion such as protrusion 324 will secure the magazine in a fixed position at a predetermined depth in the magazine sleeve. In the inserted position, the magazine sleeve does not contact base 344 of magazine sleeve 340, but cassettes or frames in the magazine sleeve can fall to base 344 of magazine sleeve 340.

Magazine sleeve 350 shown in **Figure 18** is similar in construction to magazine sleeve 340. Magazine 350 sleeve representatively includes a hollow rectangular body of, for example, plastic having interior width, W, and depth, D, dimensions to accommodate a cassette magazine such as cassette magazine 300 that contains Tissue-Tek^{®} Uni-Cassette^{®} cassettes. Representatively, magazine sleeve 350 has an interior width dimension, W, on the order of 30 mm to 33 mm and a depth dimension, D, of 43 mm to 45 mm. Magazine sleeve 350 includes pairs of rails 352 on its front and rear sidewalls are operable to slide within grooves 284 in front and rear sidewalls of hopper 115 and hopper 120 shown in **Figure 13** and **Figure 14** and base 354 that extends across the interior width, W, and depth, D, dimensions or alternatively a shelf on opposing pairs of sidewalls. A rear sidewall of magazine sleeve 350 includes opening or window 355 to expose an RFID tag on cassette magazine, such as RFID tag 323 on cassette magazine 300. A cassette magazine such as cassette magazine 300 is loaded into magazine sleeve 350 with its rear sidewall facing a rear sidewall of magazine sleeve 350 and extends a depth into magazine sleeve 350 to expose RFID tag 323 through opening or window 355. A front sidewall of magazine sleeve 350 includes rectangularly-shaped opening or window 351 to accommodate a similarly-shaped and dimensioned protrusion on a front sidewall of a magazine (e.g., protrusion 324 on cassette magazine 300). Once a magazine such as magazine 300 is inserted into magazine sleeve 350, the front sidewall protrusion such as protrusion 324 will secure the magazine in a fixed position at a predetermined depth in the magazine sleeve. Magazine sleeve 350 further includes opposing left and right sidewalls. Each of the opposing left and right sidewalls has opening 356 at its base having a height dimension, H, that exposes base 354 as well as at least one full cassette or frame (i.e., base 354 plus the height dimension of at least one cassette).

Referring again to **Figure 13** and **Figure 14****,** magazine sleeve 340 and magazine sleeve 350 may be respectively loaded into hopper 115 or hopper 120 through a top opening of the hopper and a cassette magazine such as cassette magazine 300 may be loaded into the magazine sleeve. Hopper sub-assembly 260 includes right ejector or pusher assembly 286 and left ejector or pusher assembly 288. Each of right pusher assembly 286 and left pusher assembly 288 include a motor (e.g., motor 289 of left pusher assembly 288 shown in **Figure 13****)** that drives a pulley 290, 292 that is connected to sled 294, 296 to move sled 294 in a lateral (right) direction and sled 296 in a lateral (left) direction as viewed from a first position outside an area below hopper 115/hopper 120 to a second position inside an area below the hopper, such as a second position that extends a distance to the hopper wall of each of hopper 115 and hopper 120 that is closest to chute 282, and then return the sled to the first position. Sled has a height or thickness that is no greater than a height of cassette base or frame, such as no greater than 13 mm, such as 10 to 12 mm.

When a magazine sleeve such as magazine sleeve 340 is loaded, for example, into hopper 115, a base 344 of magazine sleeve 340 is positioned below a height of sled 296 so that a cassette or frame in a cassette magazine loaded into the magazine sleeve is seated on base 344 in a plane similar to a plane of the base of sled 296. As described above, a cassette or frame is seated on base 344 below the bottom of the cassette magazine with possibly other cassettes stacked above it. When pusher assembly 288 moves sled 296 from a first position through opening 287 under hopper 115, the sled will push the cassette or frame seated on base 344 inward toward chute 282 and eventually onto chute 282. The sled will then return to the first position allowing any next cassette or frame in the cassette magazine to fall onto base 344.

As described above, disposed in a front sidewall of housing 110 of printer 100 is cassette door 130. Opening cassette door 130 provides an access opening for insertion of a single cassette or frame (e.g., one at a time) into printer 100. A front end of chute 282 is positioned behind cassette door 130. Thus, rather than dispensing cassettes or frames onto chute 282 by way of hopper 115 or hopper 120, a single cassette or sleeve may be introduced for printing through cassette door 130. An example where cassette door 130 and the printing of a single cassette may be desired is an emergency cassette or frame that needs to be printed that is dissimilar to a magazine of cassettes or frames in either hopper 115 or hopper 120 or an undersized or oversized cassette or frame that will not fit a magazine sleeve suitable for hopper 115 or hopper 120.

**Figure 13** shows a front view of hopper sub-assembly 260. Connected to front wall of hopper 115 is light emitting diode 297 that emits a light indicative of the status of printer 100. For example, light emitting diode 297 will emit a green light when printer 100 is on and operable or a red light if there is an issue to address with the printer. **Figure 14** shows a rear view of hopper sub-assembly 260. Connected to a rear or back sidewall of hopper 115 is RFID reader/writer 291 and connected to a rear or back sidewall of hopper 120 is RFID reader/writer 293. RFID reader/writer 291 and RFID reader/writer 293 are each operable to read an RFID tag on a cassette magazine such as RFID tag 323 on cassette magazine 300. RFID reader/writer 291 and RFID reader/writer 293 are thus able to confirm the type of cassettes or frames in a cassette magazine loaded into the respective hopper, a color of the cassettes and an amount of cassettes in the cassette magazine. As a cassette is removed from the cassette magazine such as by pusher assembly 286 or pusher assembly 288 from a base of the cassette magazine for a printing operation, RFID reader/writer 291 or RFID reader/writer 293 can write the number of cassettes or frames remaining in the cassette magazine, such as to RFID tag 323 on cassette magazine 300, by subtracting the removed cassette or frame from the total number of cassettes or frames present in the cassette magazine at the start of the printing operation and after each subsequent cassette printing.

Also connected to a rear or back sidewall of hopper 115 is RFID reader/writer 299. RFID reader/writer 299 is operable to read an RFID tag on an inkjet cartridge loaded into inkjet printer 100 as explained below. RFID reader/writer 299 provides the system the ability to identify the type of inkjet cartridge (e.g., a type of ink) as well an ability to track an amount of ink in an inkjet cartridge in inkjet printer 100 by rewriting to RFID tag an amount after each use. For example, an inkjet cartridge may contain enough ink to print 10,000 identifiers on cassettes or frames. In this example, RFID tag will start with an amount of 10,000 prints available. After a first cassette or frame is printed, RFID reader/writer 299 can rewrite the amount of prints available as 999 prints and proceed to subtract and rewrite the total amount remaining as each cassette or frame is printed thereafter.

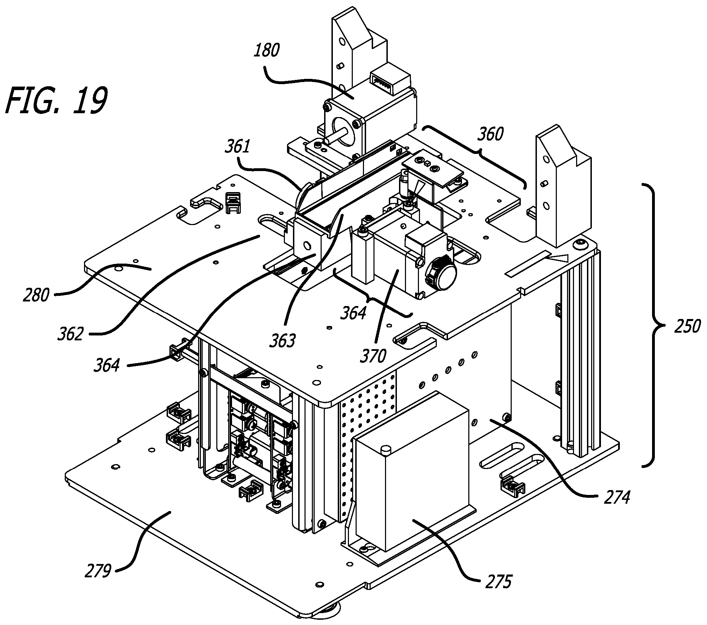

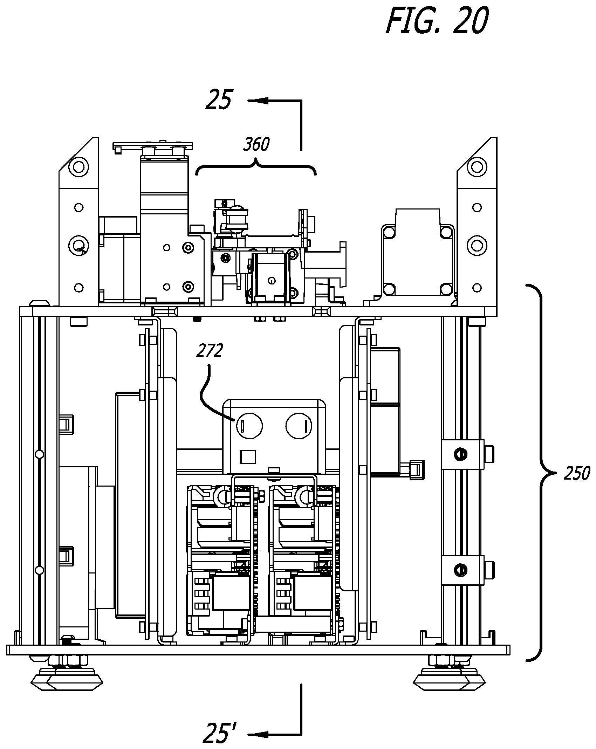

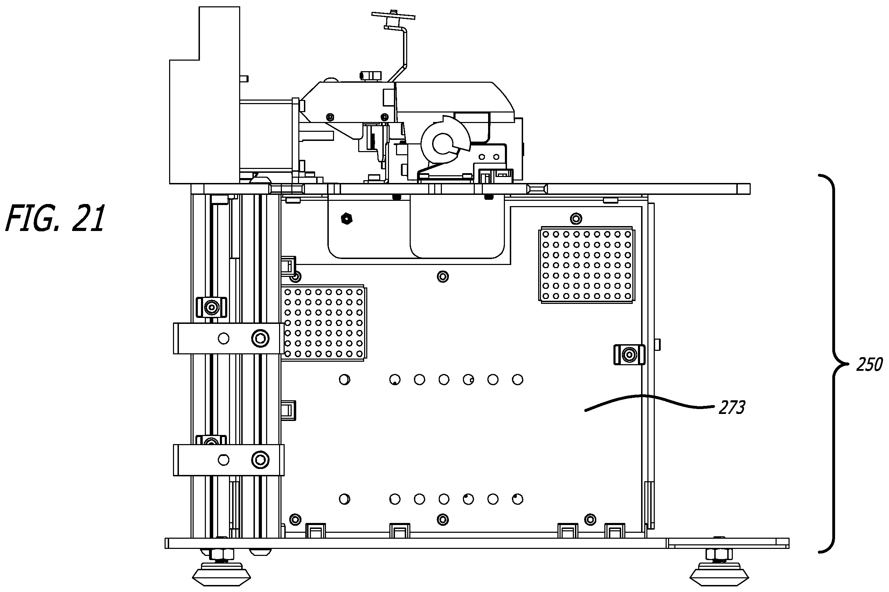

**Figure 19** shows a top right side perspective view of electronics and bottom plate sub-assembly 250 separated from hopper sub-assembly 260 and print engine sub-assembly 270. **Figure 20** is a rear view of separated electronics and bottom plate sub-assembly 250. **Figure 21** is a left side view of separated electronics and bottom plate sub-assembly 250. Electronics and bottom plate sub-assembly 250 includes direct current power supply assembly 272, inkjet printer left controller board 273, inkjet printer right controller board 274 and PC controller 275 as well as other electronics to operate inkjet printer 100 connected to base 279 of the inkjet printer. PC controller 275 contains non-transitory machine-readable instructions for operation of inkjet printer 100.

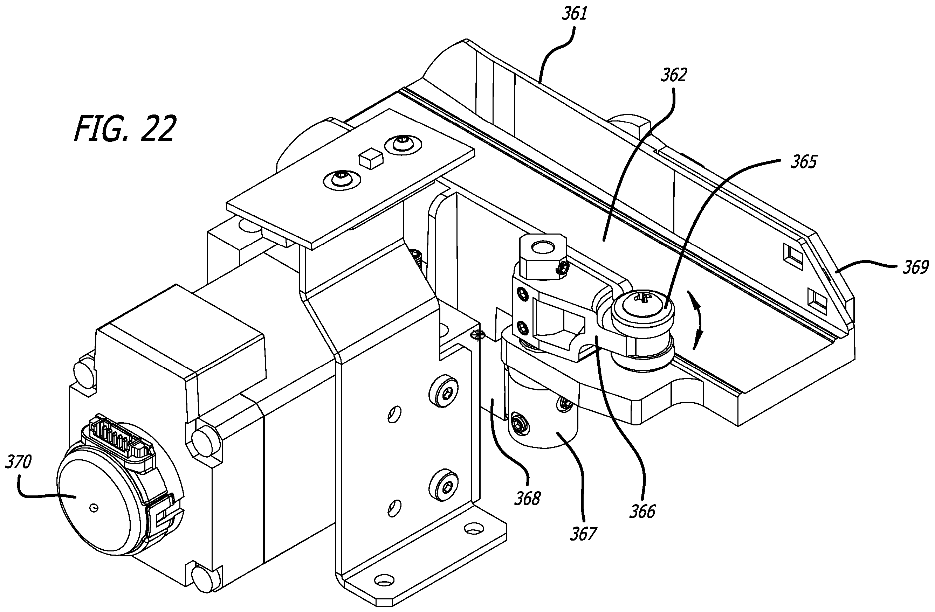

Electronics and bottom plate sub-assembly 250 also includes tilting chute assembly 360. Tilting chute assembly 360 includes tilting chute 362 and tilting chute motor and clamp lever sub-assembly 364. Tilting chute 362 has a flat upper surface and a width dimension similar to chute 282. The chute surface of tilting chute 362 is defined by opposing left edge wall 361 and right edge wall 363 along a length dimension. As shown in **Figure 22****,** left edge wall 361 extends an entire length dimension of tilting chute 362 while right edge wall 363 extends from the front of tilting chute 362 and ends short of a rear end of the tilting chute. Disposed on the right side of tilting chute 362 is a clamping mechanism that includes roller clamp 365 that is connected to clamp arm 366, clamp lever 367 and solenoid 368. The operation of solenoid 368 engages clamp lever 367 to rotate clamp arm 366 and move roller clamp 365 toward left edge wall 361 so that when a cassette or frame is at the rear end of tilting chute 362, roller clamp 365 can contact a sidewall of the cassette or frame and clamp or hold the cassette or frame against left edge wall 361. **Figure 22** shows sensor 369 connected to a rear of left edge wall 361. Sensor 369 is, for example, a photoelectric sensor that will detect when a cassette or frame is at the rear of tilting chute 362. When a cassette or frame is detected, instructions from PC controller 275 will activate solenoid 368 to clamp the cassette or frame with roller clamp 365.

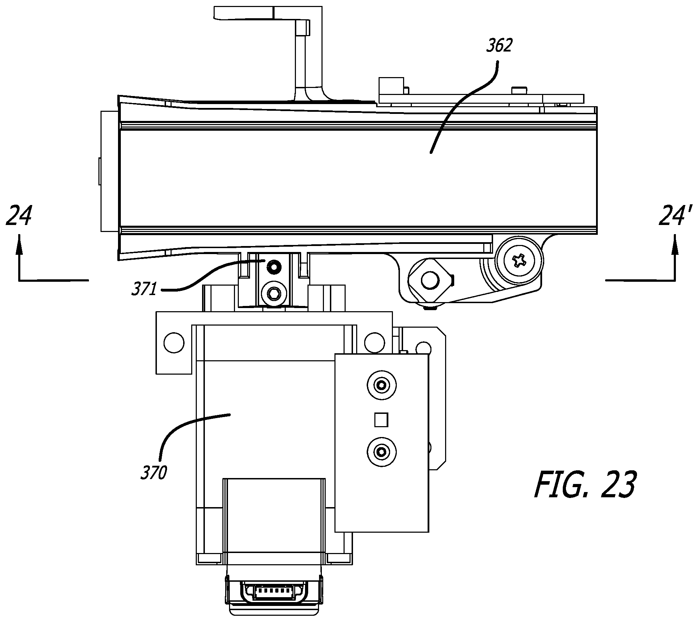

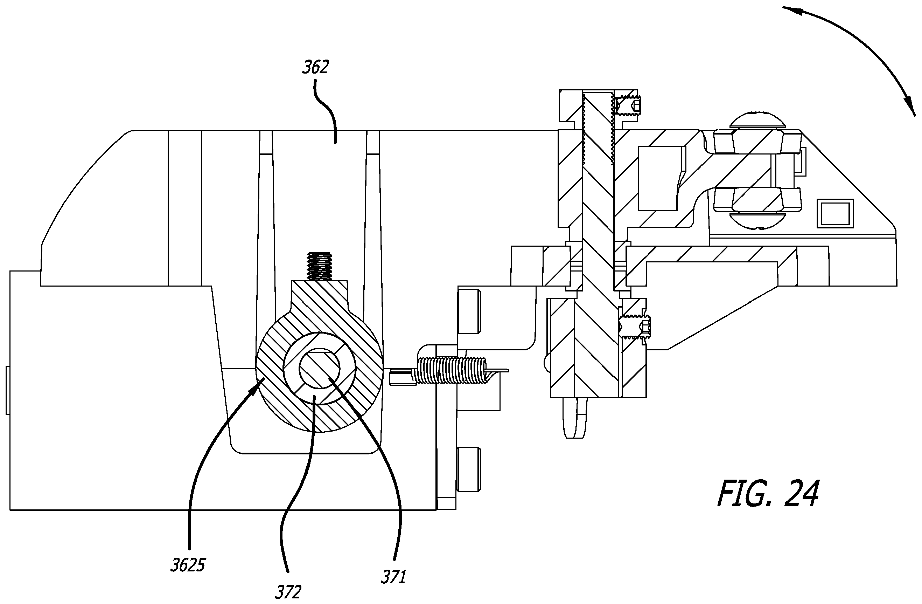

Tilting chute motor and clamp lever sub-assembly 364 also includes tilt axis motor 370 that is operable to rotate tilting chute 362 based on instructions from PC controller 275. **Figure 23** shows a top view of tilting chute assembly 360. In this view, tilting chute 362 is in a horizontal position. **Figure 23** also show tilt axis motor 370 including shaft 371 connected to tilting chute 362. **Figure 24** shows a view through line 24-24' of **Figure 23****.** **Figure 24** shows tilting chute 362 having base 3625 that has an opening therethrough. Shaft 371 connected to tilt axis motor 370 is disposed through the opening in base 3625. Bearing 372 is disposed around shaft 371. Rotation of shaft 371 by tilt axis motor 370 in a clockwise direction as viewed will rotate tilting chute 362 in a clockwise direction about an axis defined by shaft 371 and rotation of shaft in a counterclockwise direction will rotate tilting chute 362 in a counterclockwise direction. A clockwise rotation is desired when a cassette or frame is to be loaded onto tilting chute 362 and a counterclockwise rotation is desired prior to a printing operation on the cassette or frame.

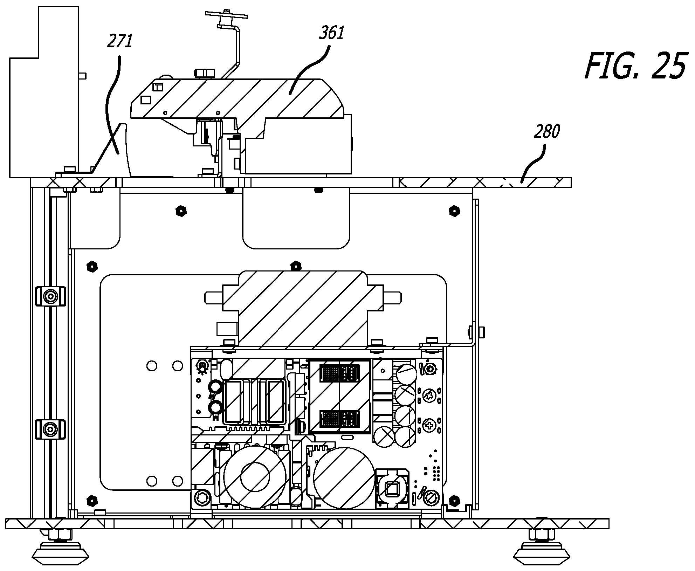

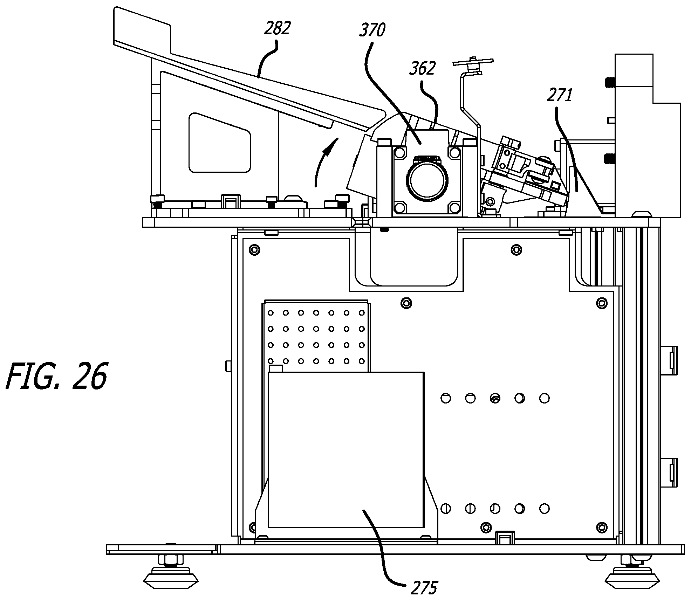

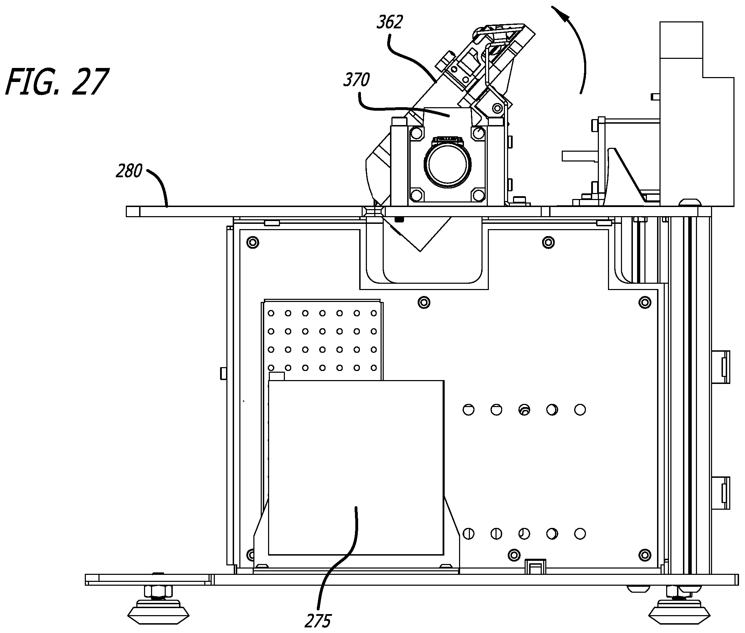

As described above with respect to **Figure 13** and **Figure 14****,** a cassette or frame in hopper 115 or hopper 122 will be pushed onto chute 282 of hopper sub-assembly 260. Chute 282 has a flat upper surface disposed at an angle on the order of 30° to 50° relative to base plate 281 such that chute 282 is sloped downward from front to back allowing a cassette placed on chute 282 to slide down the chute from front to back. In order to transition from chute 282 to tilting chute 362, tilting chute 362 is rotated in a clockwise direction to the same angle or slope as chute 282. As seen in **Figure 22****,** tilting chute 362 has no rear end wall. To prevent a cassette or frame from sliding off the rear end of tilting chute 362 when tilting chute 362 is positioned at the same angle or slope as chute 282 there is provided a stopper or stoppers at a rear of tilting chute 362. **Figure 25** shows a view of electronics and bottom plate sub-assembly 250 through line 25-25' of **Figure 20****.** **Figure 25** shows stopper 271 of, for example, a rubber or plastic material connected to platform 280 and projecting upward from platform 280, as viewed a distance to act as a rear wall when tilting chute 362 is rotated to match an angle or slope of chute 282. **Figure 26** shows a right side view of electronics and bottom plate sub-assembly 250 after tilting chute 362 has been rotated clockwise, as viewed, by tilt axis motor 370 to match the same angle or slope as chute 282. A front end of tilting chute 362 mates with a rear end of chute 282. A cassette or frame will slide down chute 282 onto tilting chute 362 face first. When the cassette or frame slides to the back of tilting chute 362, it will be detected by sensor 369 **(****Figure 22****).** Instructions from PC controller 275 will then direct that the cassette or frame be clamped by roller clamp 365. Once clamped, instructions from PC controller 275 will direct a rotation of tilting chute 362 by tilt axis motor 370 counterclockwise to convey the cassette or frame to print engine sub-assembly 270, to a position where a face of the cassette or frame can be exposed to a heat source and to receive printing from an inkjet printer. **Figure 27** shows a right side view of electronics and bottom plate sub-assembly 250 and shows tilting chute 362 rotated to a heating and printing position. As shown in **Figure 19** and **Figure 27****,** platform 280 has an opening below tilting chute 362 to allow a front end of tilting chute 362 to rotate downward while a rear end of tilting chute 362 will rotate up toward a vertical position.

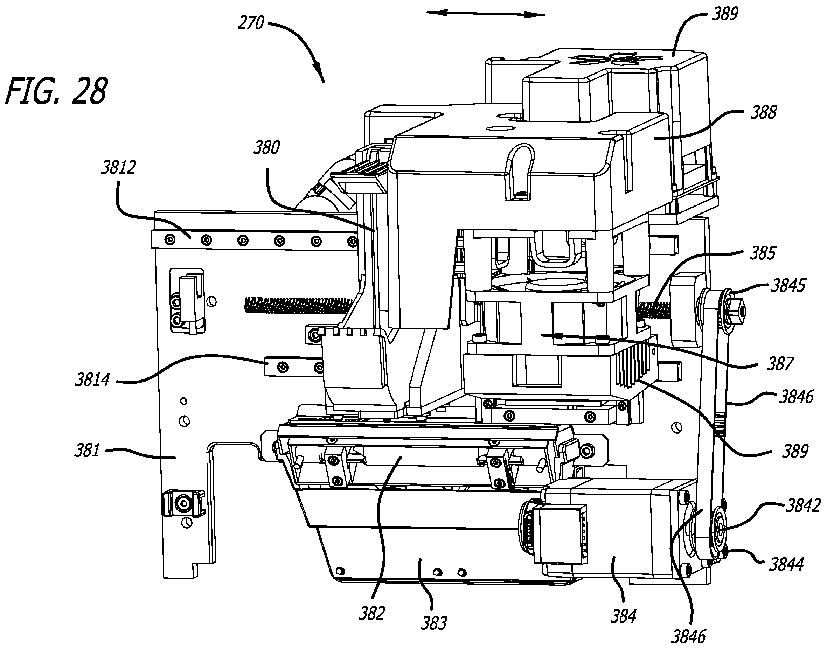

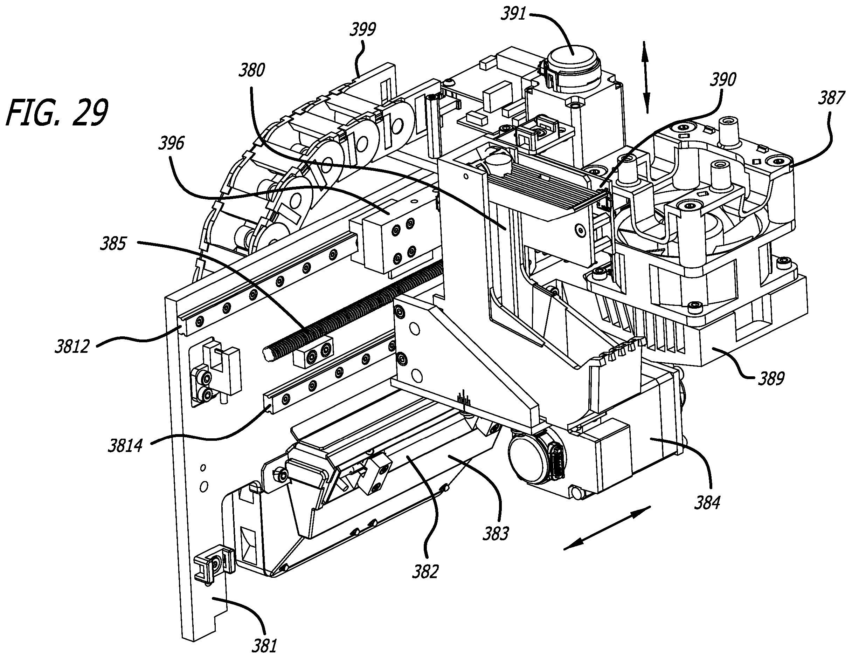

**Figure 28** shows a front side view of print engine sub-assembly 270 separated from electronics and bottom plate sub-assembly 250 and hopper sub-assembly 260. Print engine sub-assembly 270 includes inkjet cartridge holder 380 and ultraviolet (UV) light emitting diode (LED) 387 each slidably connected (left to right as viewed) to a front or forward side of bracket 396 (see **Figure 29****).** A rear side of bracket 396 has a first cut-out or slot to on horizontally-disposed metal rail or cleat 3812 and metal rail or cleat 3814 on substrate 381 that is, for example, a metal plate. UV LED 387 has a UV-A wavelength on the order of 365 nanometers (nm) to 430 nm and produces up to 12 watt per square centimeter of optical power from 390 nm to 430 nm. Disposed below and connected to UV LED 387 is heat sink 389. Disposed horizontally below inkjet cartridge holder 380 and also connected to substate 381 is infrared (IR) heater 382. IR heater 382 is, for example, an electrically powered heater single tube short wave IR heater that has a total length on the order of 100 millimeters (mm), a heating length of 32 mm, a power of 125 watts and a voltage of 36 volts. Below IR heater 382 is heater fan assembly 383. To a rear of heater fan assembly 383 and connected to substate 381 is motor 384. Motor 384 includes shaft 3842 projecting from a rear of the motor and pulley 3844 on shaft 3842. Connected to inkjet cartridge holder 380 and UV LED 387/heat sink 389 between the inkjet cartridge holder and the printer assembly and substate 381 is lead screw lead screw 385. A right side of lead screw 385 includes pulley 3845 fixedly connected to the lead screw. Pulley 3845 is connected to pulley 3844 by belt 3846. Rotation of shaft 3842 by motor 384 rotates pulley 3845 which rotates lead screw and moves inkjet cartridge holder 380 and UV heater/heat sink 389 left or right (x-direction movement) depending on the direction of rotation of shaft 3842 by motor 384. The x-direction movement is guided by rail 3812 and raid 3814 on substrate 381 (see **Figure 29****).** **Figure 28** also shows electronics guard 388 covering and connected to UV LED 387 and wire and fan guard 389 behind electronics guard 388.

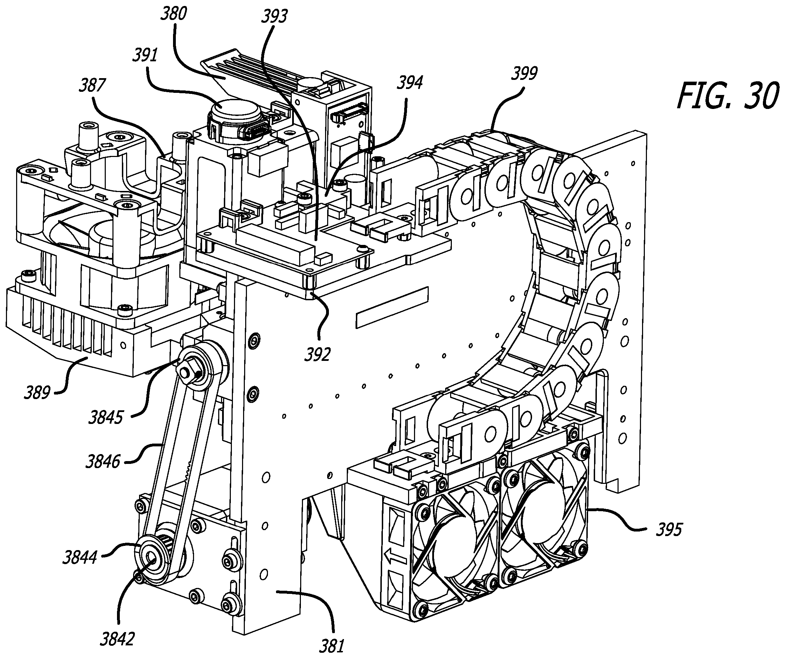

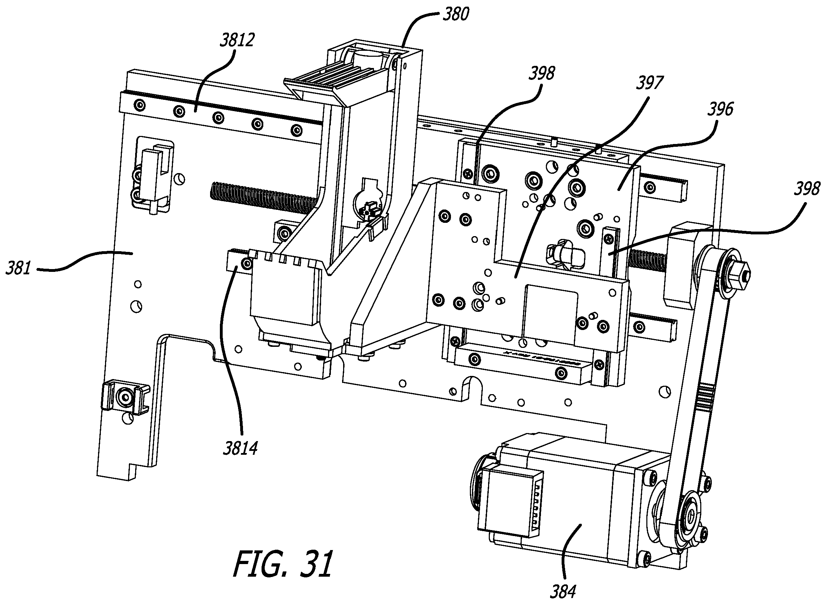

**Figure 29** shows a top perspective front side view of print engine sub-assembly 270 separated from electronics and bottom plate sub-assembly 250 and hopper sub-assembly 260. **Figure 30** shows a top perspective rear side view of print engine sub-assembly 270 separated from electronics and bottom plate sub-assembly 250 and hopper sub-assembly 260. In both **Figure 29** and **Figure 30****,** electronics guard 388 and fan guard 389 are removed. **Figure 29** shows barcode reader 390 disposed between inkjet cartridge holder 380 and UV LED 387. **Figure 31** shows a top perspective front side view of print-engine sub-assembly 270 with electronics guard 388 and fan guard 389 removed and also with UV LED 387 and barcode reader 390 removed. **Figure 31** shows L-bracket 397 of, for example, a metal plate slidably connected to a front surface of bracket 396. Bracket 396 includes cleats or rails 398 connected thereto in a vertical orientation (z-direction). A rear side of L-bracket 397 includes slots that align with cleats or rails 398. The connection allows L-bracket 397 to move or slide in a vertical direction (a z-dimension). Inkjet cartridge holder 380, UV LED 387 and barcode reader 390 are each connected to L-bracket 397 and thus can be moved in a vertical direction (up or down) with the movement of L-bracket 397. **Figure 29** and **Figure 30** show motor 391 that is connected to L-bracket 397 and is operable to move L-bracket 397 and inkjet cartridge holder 380, UV LED 387 and barcode reader 390 up or down (z-direction movement). Depending on a cassette or frame type to be printed with an identifier, a tilt angle could be different and/or a position of the print surface could be different (e.g., a Tissue Tek^{®} Mega-Cassette^{™} is larger in a height dimension (z-dimension) than a Tissue-Tek^{®} Uni-Cassette^{™}). A representative distance between a printhead of a thermal inkjet cartridge in inkjet cartridge holder 380 during a print operation is on the order of 1 mm to 4 mm. A z-axis of inkjet cartridge holder 380, UV LED 387 and barcode reader 390 will need to be moved up or down to avoid contact with a cassette or frame held by tilting chute 362 and also to get close to a print surface. A z-axis will also change (e.g., be lowered) when an ink cartridge in inkjet cartridge holder 380 is getting wiped or capped at service station 200. Other examples where a z-axis might change would be to move a face of a cassette or frame closer to UV LED 387 or to read an identifier printed on a cassette or frame with barcode reader 390 during a quality control operation as described below (e.g., moving a barcode reader during a scan allows for better detection of the barcode and reduces glare off of surface of a cassette or frame). When ink cartridge in inkjet cartridge holder 380 and/or service station 200 needs to be removed and replaced with another (swapped out), the z-axis can be raised to facilitate a removal and replacement.

**Figure 30** shows platform 392 of, for example, a metal plate, connected to a top side of substrate 381 as viewed. Attached to platform 392 is cable landing board 393 and photoelectric sensor 394. Photoelectric sensor 384 is used to detect a home position for a z-axis (z-dimension) of bracket 396 and inkjet cartridge holder 380, UV LED 387 and barcode reader 390. Motor 391 moves bracket up **Figure 30** further shows fan assembly 395, e.g., two fans, connected at a base of a back side of substrate 381. Fan assembly 395 may be used to remove heat and is controlled by PC controller 275. **Figure 29** and **Figure 30** still further show cable carrier and guard 399 disposed on a back side of substrate 381 and running from a top side of fan assembly 395 to cable landing board 393. Cable carrier and guard 399, such as an IGUS^{®} cable carrier and guard, may be used to protect electronic cables running, for example, from electronics and bottom plate sub-assembly 250 to print engine sub-assembly 270.

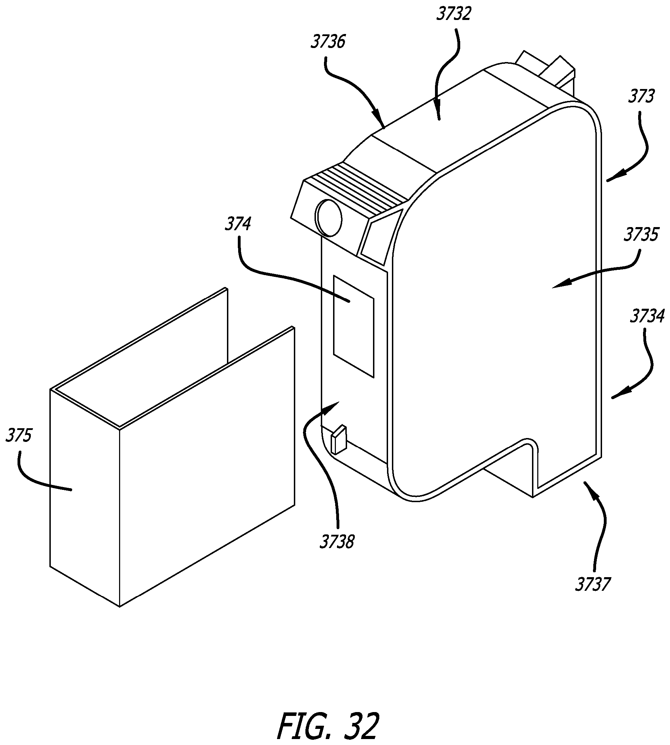

**Figure 32** shows a top right side perspective view of an inkjet cartridge suitable for use in inkjet printer 100. Inkjet cartridge 373 is, for example, a thermal inkjet cartridge. In another example, inkjet cartridge may be piezoelectric inkjet cartridge. Inkjet cartridge 373 includes a body defining an exterior of the cartridge, the body including, in this example, casing 3732 having a generally rectangular perimeter (length, L and width, W) with downwardly protruding snout portion 3734 at one side of its base as viewed in **Figure 32****.** Representative dimensions for casing 110 include, but are not limited to a length, L, of 2 centimeters (cm) to 8 cm, a depth, D, of 1.5 cm to 8 cm, and a width, W, of 1 cm to 3 cm. A width, W, of casing 3732 defines an interior volume of inkjet cartridge 373 and separates opposing housing sidewalls 3735 and 3736. Housing sidewalls 3735 and 3736 have a shape similar to casing 3732 and may be affixed to casing 3732 through an adhesive, heat bonding or press fittings. Sidewalls 3735 and 3736 may be made of a rigid polymer or plastic material similar to a material of casing 3732 or may be made of a material that is more flexible in the presence of atmospheric pressure. Snout portion 3734 of inkjet cartridge 373 may be a portion of casing 3732 and provides a route for the discharge of an ink within inkjet cartridge 373 and includes discharge opening 3737 in its lowermost end wall to which is affixed, on its exterior surface, an inkjet printhead 170. Casing 3732 including snout portion 3734 of a rigid polymer or plastic may representatively be made by a molding technique. Sidewalls 3735 and 3736 of a rigid polymer or plastic material may also be made by a molding technique.

Casing 3732 of inkjet cartridge 373 includes front face 3738. Attached to front face 3738 of casing 3732 as shown in **Figure 32** is RFID tag 374. RFID tag 374 may include information about a type of ink in inkjet cartridge 373 as well as a volume of ink present. In one example, inkjet cartridge 373 includes a volume sufficient to print identifiers on 10,000 cassettes or frames. When installed in inkjet cartridge holder 380 (see, for example, **Figure 28****),** front face 3738 of inkjet cartridge 373 will face forward (i.e., front face 3738 will face hopper sub-assembly 260). As described above with reference to **Figure 14****,** hopper sub-assembly 260 includes RFID reader/writer 299 attached to a rear or back sidewall of hopper. RFID reader/writer 299 is operable to read an RFID tag on inkjet cartridge 373 when the inkjet cartridge is loaded into inkjet cartridge holder 380. RFID reader/writer 299 provides the system the ability to identify the type of inkjet cartridge (e.g., a type of ink) as well an ability to track an amount of ink in inkjet cartridge 373 in inkjet printer 100 by rewriting to RFID tag an amount after each use. For example, where inkjet cartridge 373 contains enough ink to print 10,000 identifiers on cassettes or frames, RFID tag 374 will start with an amount of 10,000 prints available. After a first cassette or frame is printed, RFID reader/writer 299 can rewrite the amount of prints available to RFID tag 374 as 999 prints and proceed to subtract and rewrite the total amount remaining as each cassette or frame is printed thereafter.

**Figure 32** also shows product label 375 that may be placed on front face 3738 of casing 3732 to protect RFID tag 374 during shipping and storage. When inkjet cartridge 373 is ready for use (i.e., to be placed in inkjet cartridge holder 380), product label 375 may be removed. Inkjet cartridge 373 may be placed in inkjet cartridge holder 380 by opening lid 125 on a top of housing 110 (see **Figure 3****)** to expose print engine sub-assembly 270 inside housing 110.

In operation, an inkjet cartridge such as inkjet cartridge 373 will be placed in inkjet cartridge holder 380. Prior to printing an identifier on a cassette or frame, the inkjet cartridge may be brought to service station 200. Non-transitory machine-readable instructions from PC controller 275 will direct motor 384 to move inkjet cartridge holder 380 (including an inkjet cartridge) as well as barcode reader 390 and UV LED 387 to an area including service station 200. The instructions from PC controller 275 will align a printhead of the inkjet cartridge above spittoon 215 and direct the discharge of an amount of ink from the inkjet cartridge into the spittoon 215 to purge the printhead. Further instructions from PC controller may direct that the inkjet cartridge be moved to roller 210 to contact a cloth or absorbent side of ribbon 220 on the roller in a manner to wipe a surface of the printhead with ribbon. PC controller 275 will then direct motor 384 to move inkjet cartridge holder 380 (including the inkjet cartridge) as well as UV LED 387 to an area for printing a cassette or frame.

When a cassette or frame is ready for printing, such as when tilting chute 362 is lifted to raise a cassette or frame to a position near IR heater 382, print engine sub-assembly 270 will initially heat (pre-heat) a face of a cassette or frame raised by tilting chute 362 with IR heater 382. A duration of the pre-heating operation may last on the order of one second to four seconds, such as two to three seconds, such as two seconds. A purpose of the pre-heating operation is to improve an adhesion of ink subsequently applied to a face of the cassette or frame by an inkjet printing operation. Prior to the IR heating operation, non-transitory instructions from PC controller 275 may direct that inkjet cartridge holder 380 (containing an inkjet cartridge), barcode reader 390 and UV LED 387 be moved by motor 384 to a position away from IR heater 382, such as moved to the right (x-direction movement) with reference to **Figure 28****.** Following the pre-heating operation, IR heater 382 is turned off and motor 384 moves inkjet cartridge holder 380 containing an inkjet cartridge in front of the cassette or frame (a left to right, x-direction movement) so that a printhead of the inkjet cartridge is above a face of the cassette or frame (e.g., one to three millimeters above the face of the cassette or frame). Tilting chute 362 holds the raised cassette or frame in a position near vertical that orients a face of the cassette or frame in a plane parallel to a plane of the printhead of the inkjet cartridge. An identifier may then be printed on the raised cassette or frame.

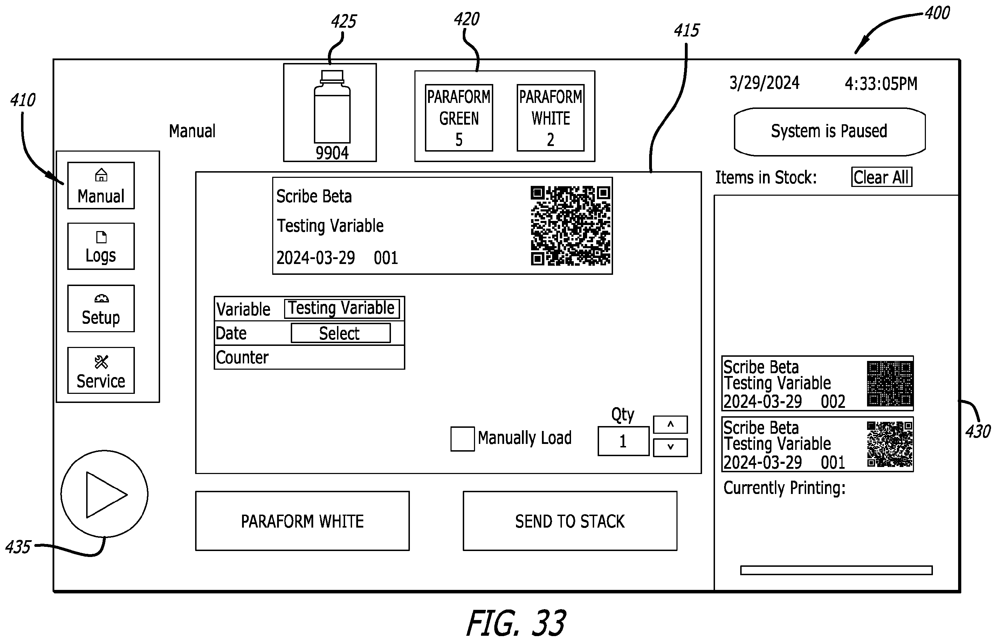

As described above with reference to **Figure 19****,** electronics and bottom plate sub-assembly 250 includes PC controller 275. PC controller 275 includes non-transitory, machine-readable instructions (a software program) to print identifiers. PC controller 275 includes, for example, a Windows^{®} operating system. A user desiring to print one or more cassettes or frames will, for example, connect via a network access to the machine-readable instructions through an IP address to launch the machine-readable instructions in PC controller 275. Once connected, an interface will then appear for the user which will allow the user to dictate what is printed on the identifier. **Figure 33** shows an example of a user interface. User interface 400 includes menu bar 410 specifying the operations available to the user, such as a manual printing operation, a review of logs of previous printing operations, a setup operation for the printer, and a service operation. User interface 400 also includes job information window 415 that allows a user to enter information that is desired for an identifier. For example, a user may want the identifier to include three lines of text printed as well as a barcode. Examples of text include, but are not limited to a patient name, a testing variable, a date and a counter. The desired text will appear in job information window 415 along with a generated barcode for the user to view. Job information window 415 also allows a user to select the quantity of cassettes or frames to be printed with the desired identifier information. User interface 400 may also include hopper details window 420 that allows a user to select a type and color of a cassette(s) or frame(s) to receive the identifier. User interface 400 may also include ink detail window 425 that indicates a volume of ink available in an inkjet cartridge (e.g., inkjet cartridge 373) in inkjet printer 100. Still further, user interface 400 may include queue window 430 that indicates a current status of inkjet printer, such as what is currently being printed or waiting to be printed. Once the user is satisfied with the identifier to be printed on a cassette(s) or frame(s), the type and color of the cassette(s) or frame(s) and the number of cassettes or frames to be printed, the user directs the printing by inkjet printer 100 at print button 435. PC controller 275 receives the printing information, verifies that the type, color and number of cassettes or frames are present in hopper 115 or hopper 120 by referencing information from RFID reader/writer 291 or 293 (see **Figure 14****)** and carries out the printing operation by communicating with print engine sub-assembly 270 to print the desired identifier.

Returning to **Figures 28-31** of print engine sub-assembly 270, following printing of an identifier on a cassette or frame, inkjet cartridge holder 380 (containing an inkjet cartridge) will be moved to the left as viewed by motor 384 to place UV LED 387 near a face of the cassette or frame held by tilting chute 362. UV LED 387 will then be turned and apply ultraviolet energy to a face of the cassette or frame to partially or completely cure the identifier printed thereon. A UV curing operation representatively may take one to four seconds, such as one to three seconds, such as two to three seconds, such as two seconds.

Following a UV cure of an identifier printed on a cassette or frame held in tilting chute 362, motor 384 will move UV LED 387 to the right as viewed in **Figures 28-29** to place barcode reader 390 in front of a face of the cassette or frame containing the newly printed identifier. A quality control operation will then be performed. Non-transitory machine-readable instructions in PC controller 275 will direct barcode reader 390 to read the barcode printed on the identifier and communicate that to PC controller 275. PC controller 275 will then verify if the barcode could be read and if barcode information is correct (i.e., what the user desired to be printed as the identifier). If the barcode can be read and the barcode information is correct, the printing operation is completed and the cassette or frame will be released by tilting chute 362. If the barcode cannot be read or the barcode information is incorrect, PC controller 275 will direct that the identifier information on the cassette or frame be destroyed or marred. To destroy or mar the barcode, motor 384 will move inkjet cartridge holder 380 (containing an inkjet cartridge) back over the face of the cassette or frame and darken (e.g., blacken) or overprint the identifier area so that the barcode can no longer be read and/or is visibly unacceptable to the user. Following the destruction or marring of the barcode, the destroyed or marred identifier may be cured by motor 384 moving UV LED 387 over the face of the barcode and performing a UV curing operation. The cassette or frame with the destroyed or marred barcode may then be released by tilting chute 362.

Following a printing and quality control operation or a series of printing and quality control operations, non-transitory machine-readable instructions in PC controller 275 may direct that motor 384 move inkjet cartridge holder 380 containing an inkjet cartridge to service station 200 for servicing and temporary storage. Inkjet cartridge holder 380 along with barcode reader 390 and UV LED 387 are moved by motor to an area including service station 200. At service station 200, instructions from PC controller 275 may, optionally, direct the purging of ink into spittoon 220, followed by wiping on ribbon on roller 210 and then capping or sealing of the printhead of the inkjet cartridge on (e.g., in complete contact with) ribbon 220 on roller 205 to inhibit drying of the ink in the inkjet cartridge. When an inkjet cartridge is to be moved from the capped position and returned to a printing operation, instructions from PC controller 275 may direct that ink be purged in spittoon 220 and/or wiped on ribbon on roller 210 and then moved to a printing area. Instructions from PC controller 275 may also direct that take-up roll 235 in service station 200 be rotated to expose clean or unused portions of ribbon 220 on roller 210.

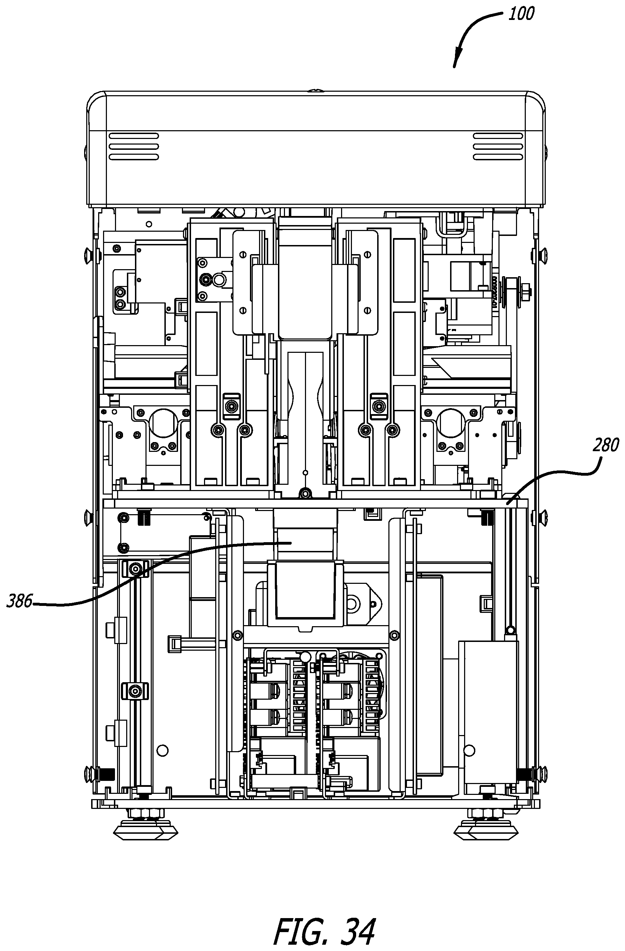

As described above, tilting chute 362 holds a cassette or frame for printing in a near vertical position. Following printing, curing and quality control operations, tilting chute 362 releases the cassette or frame roller by the operation of solenoid 368 to release roller clamp 365 described with reference to **Figure 22****.** The released cassette or frame is then allowed to fall freely down the tilting chute (toward the front of the tilting chute). **Figure 34** is a front view of printer 100 with a front sidewall removed. **Figure 34** shows exit chute 386 below platform 280. Platform 280 has an opening therethrough below tilting chute 362. Exit chute 386 extends to or through this opening. Exit chute 386 includes a chute surface that aligns with a plane of tilting chute 362 when tilting chute 362 is in a near vertical position. When tilting chute 362 releases a cassette or frame, the cassette or frame will fall into and through exit chute 386. Exit chute 386 will bring the cassette or frame to the front of printer 100.

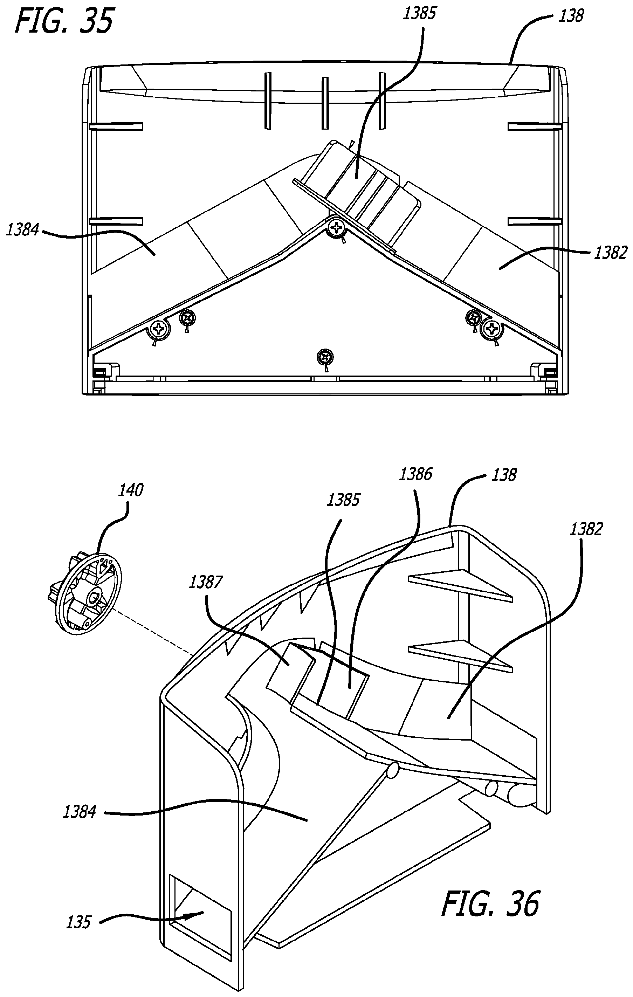

**Figure 35** shows a rear view of lower panel 138 of the front sidewall of housing 110. **Figure 36** shows a top right perspective rear view of lower panel 138. Connected to a rear wall of lower panel 138 is left side ramp 1382 and right side ramp 1384. Each of left side ramp 1382 and right side ramp 1384 extend at an angle, α, of 30° to 50°, such as 45° from a midpoint of a back of lower panel 138 to an exit opening in a left or right sidewall of the lower panel 138, respectively (see exit opening 135 in **Figure 3****).** Exit chute 386 terminates at an apex of each of left side ramp 1382 and right side ramp 1384. At an apex of each of left side ramp 1382 and right side ramp 1384 is diverter 1385. Diverter 1385 is used to divert a cassette to one of left side ramp 1382 and right side ramp 1384. Diverter 1385 is connected to knob or dial 140 on a front side of lower panel 138. A user is permitted to make a selection whether a printed cassette or frame exits inkjet printer through an exit opening on the left or right side of the printer. The user makes this selection by positioning (turning) knob or dial 140 to the left or the right. As seen in **Figure 36****,** diverter 1385 has upward projecting edge wall 1386 on a left side and projecting edge wall 1387 on a right side. A position of the projecting edge walls determines whether a cassette or frame will exit inkjet printer through an exit opening on the left or right side of the printer. Diverter 1385 also reverses the orientation of the cassette or frame exiting the printer. A cassette or frame released by tilting chute 362 will fall with a rear sidewall forward. When the cassette or frame contacts diverter 1385, diverter 1385 will cause the cassette or frame to re-orient itself and slide down left side ramp 1382 or right side ramp 1384 face forward through the respective exit opening.

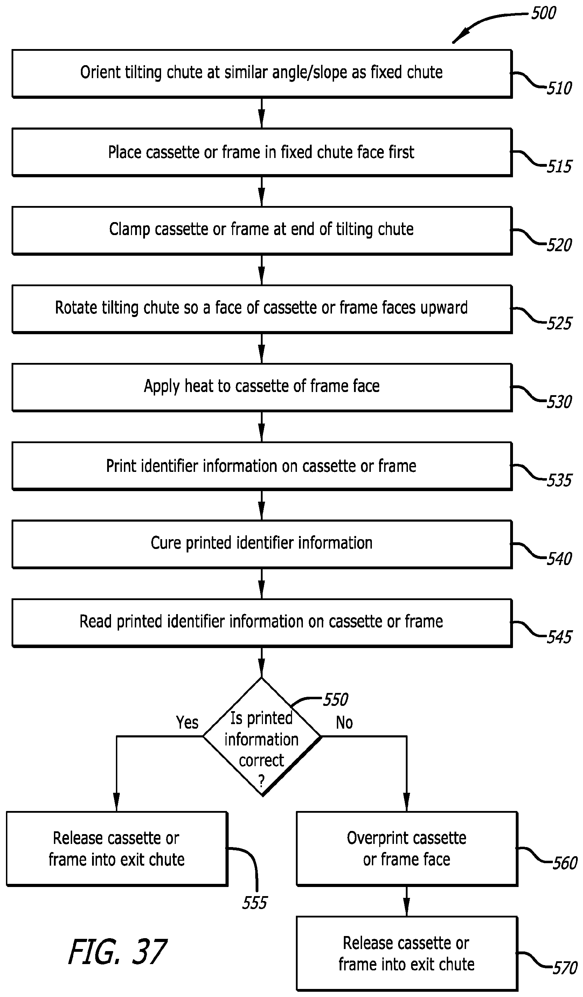

A flowchart of a printing operation in inkjet printer 100 is described with reference to **Figure 37****.** Referring to process 500 in **Figure 37****,** an initial operation is to align tilting chute 362 with a slope or angle of chute 282 (block 510). As described above, tilting chute 362 may be rotated by tilt axis motor 370 until tilting chute 362 is disposed at a similar angle or slope as chute 282. Once tilting chute 362 is at a similar angle or slope as chute 282 and clamp lever sub-assembly 364 of the tilting chute is open, a cassette or frame may be placed onto chute 282 face first (block 515). The cassette or frame may be discharged into chute 282 from a cassette magazine in hopper 115 or hopper 120 or may be manually introduced by opening cassette door 130 and placing the cassette on chute 282 face first.

When the cassette or frame reaches a rear end of tilting chute 362, the cassette or frame is clamped in tilting chute 362 (block 520). Tilting chute 362 is then rotated so that a face of the cassette or frame faces upward (block 525). A face of the cassette or frame is then heated using IR heater 382 (block 530). An identifier is then printed on a face of the cassette or frame by an inkjet cartridge in inkjet cartridge holder 380 (block 535). Following printing, the ink of the identifier on the face of the cassette is subjected to a curing operation using UV LED 387 (block 540). Following curing, the identifier is subject to a quality control operation. The printed identifier on the face of the cassette or frame is read by barcode reader 390 (block 545). PC controller 275 then confirms whether the barcode information is readable and correct (block 550). If the barcode information is readable and correct, the cassette or frame is released from tilting chute 362 into exit chute 386 and out an exit opening in the printer (block 555). If the barcode information is not readable or is incorrect, the inkjet printer is returned to a position above a face of the cassette or frame and the identifier on the cassette or frame is destroyed or marred by, for example, darkening or overprinting (block 560). The destroyed or marred cassette or frame is then released from tilting chute 362 into exit chute 386 and out an exit opening in the printer (block 570).

## Claims

1. A printer comprising:
a housing comprising:
an entrance opening operable for an introduction of one or more cassettes or cassette frames into the housing;
a print engine sub-assembly comprising:
an inkjet cartridge holder operable to accept an inkjet cartridge; and
a heater;
a chute disposed between the entrance opening and the print engine; and
a processor comprising non-transitory machine -readable instructions to:
direct a conveyance of a cassette or cassette frame introduced in the entrance opening to the print engine; and
direct the heater to heat a face of the cassette or cassette frame before a print operation.

2. The printer of claim 1, wherein the print engine sub-assembly further comprises a curing device and the processor further comprises non-transitory machine-readable instructions to direct the curing device to cure the cassette or cassette frame after a print operation.

3. The printer of claim 2, wherein the curing device is an ultraviolet light emitting diode.

4. The printer of claim 3, wherein the heater is an infrared heater.

5. The printer of claim 1, wherein the print engine sub-assembly further comprises a reader and the processor comprises non-transitory machine-readable instructions to read the face of the cassette or cassette frame after a print operation.

6. The printer of claim 5, wherein the reader comprises a barcode reader.

7. The printer of claim 1, wherein the entrance opening comprises a hopper sub-assembly comprising:
at least one hopper comprising dimensions operable to accept a cassette magazine;
at least one pusher assembly comprising a sled operable to move from a first position adjacent a base of a cassette magazine in the hopper to a second position to push a cassette or cassette frame from a cassette magazine onto the chute.

8. The printer of claim 7, wherein the pusher assembly further comprises a motor connected to the sled and operable to move the sled from the first position to the second position.

9. The printer of claim 7, further comprises a magazine sleeve comprising a body comprising exterior dimensions to fit within the hopper and interior dimensions to receive a magazine into the body and opposing sidewall openings, a first of the opposing sidewall openings allowing the sled to move from the first position to the second position and a second of the opposing sidewall openings allowing a cassette or frame to move from a position within the magazine sleeve onto the chute.

10. The printer of claim 9, wherein the interior dimensions of the body of the magazine sleeve are specific for a particular size of cassette or cassette frames.

11. The printer of claim 7, wherein the hopper sub-assembly further comprises a radio frequency identification reader/writer positioned to read a radio frequency identification (RFID) tag on a cassette magazine and, where the RFID tag comprises a total number of cassettes or frames in the cassette magazine, to write to the RFID tag a new total number of cassettes or frames as a cassette or frame is pushed from the cassette magazine.

12. The printer of claim 1, further comprising a service station comprising a housing comprising a spittoon, a wiping roller, a sealing roller, and a ribbon disposed between a feed roll, the wiping roller, and the sealing roller and a take-up roll, the ribbon having a first absorbent side that is positioned outward over the wiping roller and an opposite film side that is positioned outward on the sealing roller.

13. The printer of claim 1, wherein the inkjet cartridge holder is operable to accept an inkjet cartridge comprising a printhead.

14. The printer of claim 1, wherein the inkjet cartridge holder is operable to accept a thermal inkjet cartridge.

15. A method comprising:
heating a face of a cassette or cassette frame; and
after heating, printing an identifier on the face of the cassette or cassette frame using an inkjet printing process.

16. The method of claim 15, wherein the method further comprises:
after printing the identifier, curing the identifier on the face of the cassette or cassette frame.

17. The method of claim 15, wherein pre-heating a face of the cassette is performed using an infrared heater.

18. The method of claim 16, wherein curing the face of the cassette or cassette frame after printing the identifier is performed using an ultraviolet light emitting diode.

19. The method of claim 15, wherein the inkjet printing process comprises a thermal inkjet printing process.

20. The method of claim 15, wherein prior to heating a face of a cassette or cassette frame, the method comprises placing a cassette or cassette frame inside an inkjet printer and after printing an identifier on a face of the cassette or cassette frame:
reading the identifier while the cassette or frame is inside the inkjet printer;
automatically determining if the identifier is readable and correct; and
if the identifier is determined to be not readable or not correct, printing on the identifier on the face of the cassette or frame using the inkjet printer to destroy or mar the identifier.

21. The method of claim 20, wherein the identifier comprises a barcode and reading the identifier comprises reading the barcode.
